# EUROPEAN PATENT APPLICATION

(11) **EP 4 203 582 A1**
(43) Date of publication of application: **28.06.2023**
(21) Application number: 21857762.5
(22) Date of filing: 20.08.2021
(51) Int. Cl.: H04W 72/04

(54) **DOWNLINK CHANNEL TRANSMISSION METHOD AND APPARATUS**

(30) Priority: 20.08.2020 CN 202010855582
(71) Applicant: Datang Mobile Communications Equipment Co., Ltd., Beijing 100085 (CN)
(72) Inventor: WANG, Jiaqing, Beijing 100085 (CN); YANG, Meiying, Beijing 100085 (CN); LUO, Chen, Beijing 100085 (CN); CHENG, Fangchen, Beijing 100085 (CN)
(74) Representative: dompatent von Kreisler Selting Werner - Partnerschaft von Patent- und Rechtsanwälten mbB
(86) International application number: PCT/CN2021/113757
(87) International publication number: WO 2022/037674

(57) **Abstract**

A downlink channel transmission method, and a downlink channel transmission device are provided. The downlink channel transmission method includes: determining a transmission parameter of a physical downlink shared channel (PDSCH), where the transmission parameter includes: a number of times N of repetition transmission and a repetition transmission mode, where N is greater than or equal to 1 and is a positive integer; and transmitting first downlink data carried on the PDSCH, according to the transmission parameter.

## Description

### CROSS REFERENCE OF RELATED APPLICATION

The present application claims a priority of Chinese patent application No. 202010855582.7 filed on August 20, 2020, which is incorporated herein by reference in its entirety.

### TECHNICAL FIELD

The present disclosure relates to the field of communications technologies, and in particular, to a downlink channel transmission method, and a downlink channel transmission device.

### BACKGROUND

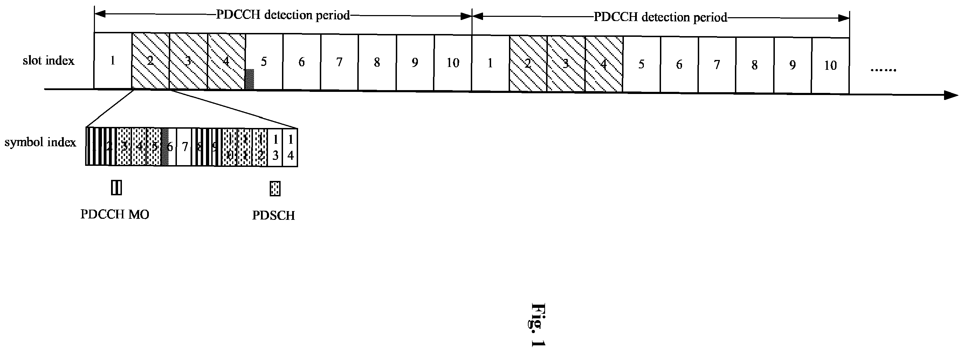

In a related XR (Extended Reality) architecture based on grid split rendering, as shown in Fig. 1, an XR service is rendered on an XR server, and an XR media is transmitted to an Extended Reality XR device through a 5G air interface, and the XR device transmits information such as tracking information on the XR device side to a 5G base station through an uplink transmission channel in time, and then the information is transmitted to the XR server by the base station. In general, the XR server and the base station may be connected by an optical fiber, and the XR device may be a Head-Mounted device (HMD), or XR glasses, or a mobile phone terminal, etc.

For XR, and in particular cloud gaming, there are very high requirements on latency, for example the end-to-end latency requirement for cloud gaming is less than 5ms, while the throughput thereof can reach hundreds of megabytes. Currently, XR transmission is assumed to be based on 5G standardized eMMB (Enhanced Mobile Broadband) and URLLC (Ultra-reliable and Low Latency Communication) technologies, in particular URLLC technologies.

The standardized transmission scheme based on slot aggregation technology in Rel-15 stage of NR (New Radio) mainly aims at enhancing coverage and providing transmission reliability, so that the technology can be suitable for URLLC scene, HARQ latency is reduced, and low-latency and high-reliability transmission is realized. However, the URLLC optimization mainly adopts a small packet transmission scenario, which brings system overhead that can be almost ignored. However, the XR scene corresponds to 4K and 8K high definition video real-time transmission, the throughput is large, PDSCH transmission adopting semi-static configuration cannot adapt to the change of outdoor scene channels, and large system overhead is brought. On the other hand, the related PDSCH repetition transmission scheme based on the time slot may not ensure that the XR service is correctly transmitted at one time, and HARQ transmission based on the slots aggregation may cause a scenario that the latency performance cannot meet a high requirement on latency, for example, a cloud game.

There is currently no specific implementation of the enhancement to 5G for XR.

### SUMMARY

The present disclosure is directed to a downlink channel transmission method and device, so as to solve the problems of large system overhead and large latency caused by the transmission of a related XR service.

In order to achieve the above object, a downlink channel transmission method is provided in an embodiment of the present disclosure, applied to a base station and including:
determining a transmission parameter of a physical downlink shared channel (PDSCH), where the transmission parameter includes: a number of times N of repetition transmission and a repetition transmission mode, where N is greater than or equal to 1 and is a positive integer; and
transmitting first downlink data carried on the PDSCH, according to the transmission parameter.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the resource mapping mode is method II, and the method further includes:
when the PDSCH transmission and a PDCCH transmission collide on the symbols occupied by the PDCCH MO, performing a punching operation on the collided PDSCH.

Optionally, the resource mapping mode is method II, and the method further includes:
when the PDSCH transmission and a PDCCH transmission collide on the symbols occupied by the PDCCH MO, performing a frequency division multiplexing on the PDSCH and the PDCCH which are collided, or transmitting second downlink data carried on a PDCCH on available symbols other than the symbols occupied by the collided PDCCH MO.

Optionally, the transmission parameter is pre-agreed, or configured by a base station.

Optionally, the transmission parameter is configured by the base station;
subsequent to the determining the transmission parameter of the PDSCH, the method further includes:
indicating the transmission parameter of the PDSCH to a terminal, through a high-layer signaling and/or a physical layer dynamic signaling.

Optionally, the indicating the transmission parameter of the PDSCH to the terminal through the high-layer signaling and/or the physical layer dynamic signaling includes:
when a PDSCH repetition transmission type indication is a first value, configuring the number of times of repetition transmission of the PDSCH in a semi-static mode through a Radio Resource Control (RRC) dedicated signaling;
when the PDSCH repetition transmission type indication is a second value, configuring the number of times of repetition transmission of the PDSCH through a physical layer dynamic signaling; where the PDSCH repetition transmission type indication is configured by the base station through an RRC signaling.

Optionally, the method further includes:
when the PDSCH repetition transmission type indication is the second value, configuring a mapping type indication of the PDSCH in a nominal repetition time slot through an RRC dedicated signaling; where
when the mapping type indication is a third value, a number of nominal PDSCH repetition time slots is equal to a number of actual repetition time slots;
when the mapping type indication is a fourth value, the number of the nominal PDSCH repetition time slots is less than or equal to the number of the actual repetition time slots;.

Optionally, the indicating the transmission parameter of the PDSCH to the terminal through the physical layer dynamic signaling includes:
indicating explicitly or implicitly the number of times of repetition transmission of the PDSCH to the terminal through the physical layer dynamic signaling.

Optionally, the indicating explicitly the number of times of repetition transmission of the PDSCH to the terminal through the physical layer dynamic signaling includes:
indicating the number of times of repetition transmission of the PDSCH to the terminal, through a first field included in downlink control information (DCI).

Optionally, the indicating implicitly the number of times of repetition transmission of the PDSCH to the terminal through the physical layer dynamic signaling includes:
indicating the number of times of repetition transmission of the PDSCH to the terminal, through a Time Domain Resource Allocation (TDRA) table, where the TDRA table is pre-appointed, or pre-allocated through a special RRC signaling, and corresponds to a TDRA field carried in DCI.

Optionally, the method further includes:
indicating to a terminal whether to skip a PDCCH MO in a first time interval.

Optionally, the indicating to the terminal whether to skip the PDCCH MO in the first time interval includes:
indicating to the terminal whether to skip the PDCCH MO in the first time interval, through a high-layer signaling and/or a physical layer dynamic signaling.

Optionally, the indicating to the terminal whether to skip the PDCCH MO in the first time interval through the physical layer dynamic signaling includes:
indicating explicitly or implicitly to the terminal whether to skip the PDCCH MO in the first time interval through the physical layer dynamic signaling.

Optionally, the indicating explicitly to the terminal whether to skip the PDCCH MO in the first time interval through the physical layer dynamic signaling includes:
indicating to the terminal whether to skip the PDCCH MO in the first time interval, through a second field included in DCI.

Optionally, the indicating implicitly to the terminal whether to skip the PDCCH MO in the first time interval through the physical layer dynamic signaling includes:
indicating to the terminal whether to skip the PDCCH MO in the first time interval through a TDRA table, where the TDRA table is pre-appointed, or pre-allocated through a special RRC signaling, and corresponds to a TDRA field carried in DCI.

Optionally, subsequent to the indicating to the terminal whether to skip the PDCCH MO in the first time interval, the method further includes:
transmitting the PDSCH on a resource occupied by the skipped PDCCH MO, when the terminal is indicated to skip the PDCCH MO in the first time interval.

Optionally, the skipped PDCCH MO is an MO corresponding to a search space corresponding to a PDCCH scheduling a current PDSCH.

Optionally, the first time interval is a PDSCH transmission time.

Optionally, the transmission parameter further includes a start symbol of a start time slot of the PDSCH transmission and a number of symbols occupied by each PDSCH transmission.

Optionally, the number of times of repetition transmission is a number of times of PDSCH repetition transmission or a number of PDSCH repetition slots.

In order to achieve the above object, a downlink channel transmission method is further provided in an embodiment of the present disclosure, applied to a terminal and including:
obtaining a transmission parameter of a physical downlink shared channel (PDSCH), where the transmission parameter includes: a number of times N of repetition transmission and a repetition transmission mode, where N is greater than or equal to 1 and is a positive integer.

Optionally, the transmission parameter is pre-agreed, or indicated by a base station.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the transmission parameter is indicated by the base station;
the obtaining the transmission parameter of the PDSCH includes:
receiving a first signaling sent by the base station;
obtaining the transmission parameter of the PDSCH based on the first signaling, where the first signaling includes a high-layer signaling and/or a physical layer dynamic signaling.

Optionally, the first signaling is the physical layer dynamic signaling;
the obtaining the transmission parameter of the PDSCH based on the first signaling includes:
obtaining the number of times of repetition transmission of the PDSCH, according to an explicit indication or an implicit indication of a physical layer dynamic signaling.

Optionally, the explicit indication of the physical layer dynamic signaling is a first field included in downlink control information (DCI), and the first field is configured to indicate the number of times of repetition transmission of the PDSCH;
the implicit indication of the physical layer dynamic signaling is a Time Domain Resource Allocation (TDRA) table corresponding to a TDRA field carried in the DCI, and a first preset row of the TDRA table is configured to indicate the number of times of repetition transmission of the PDSCH.

Optionally, the method further includes:
decoding first downlink data carried on the corresponding PDSCH, according to the transmission parameter.

Optionally, the resource mapping mode is method II, and the method further includes:
when the PDSCH transmission and a PDCCH transmission collide on the symbols occupied by the PDCCH MO and a frequency division multiplexing is performed on the PDSCH and the PDCCH which are collided, monitoring the PDCCH on the corresponding PDCCH MO,
when the PDSCH transmission and a PDCCH transmission collide on the symbols occupied by the PDCCH MO, monitoring the PDCCH on other PDCCH MOs than the symbols occupied by the collided PDCCH MO.

Optionally, the method further includes:
determining whether to skip a PDCCH MO in a first time interval based on an indication from a base station;
when the base station indicates not to skip the PDCCH MO in the first time interval, monitoring the PDCCH MO in the first time interval;
when the base station indicates to skip the PDCCH MO in the first time interval, monitoring the PDCCH MO in other time intervals than the first time interval.

Optionally, when the base station indicates to skip the PDCCH MO in the first time interval, the skipped PDCCH MO is an MO corresponding to a search space corresponding to a PDCCH scheduling a current PDSCH.

Optionally, the determining whether to skip the PDCCH MO in the first time interval based on the indication from the base station includes:
receiving a second signaling sent by the base station;
determining whether to skip the PDCCH MO in the first time interval according to the second signaling, where the second signaling includes a high-layer signaling and/or a physical layer dynamic signaling.

Optionally, the second signaling is the physical layer dynamic signaling;
the determining whether to skip the PDCCH MO in the first time interval according to the second signaling includes:
determining whether the PDSCH skips the PDCCH MO in the first time interval, according to an explicit indication or an implicit indication of the physical layer dynamic signaling.

Optionally, the explicit indication of the physical layer dynamic signaling is a second field included in DCI, and the second field is configured to indicate whether to skip the PDCCH MO in the first time interval;
the implicit indication of the physical layer dynamic signaling is a Time Domain Resource Allocation (TDRA) table corresponding to a TDRA field carried in the DCI, and a second preset row or a first preset column of the TDRA table is configured to indicate whether to skip the PDCCH MO in the first time interval.

Optionally, the first time interval is a PDSCH transmission time.

Optionally, the transmission parameter further includes a start symbol of a start time slot of the PDSCH transmission time and a number of symbols occupied by each PDSCH transmission.

Optionally, the number of times of repetition transmission is a number of times of PDSCH repetition transmission or a number of PDSCH repetition slots.

In order to achieve the above object, a downlink channel transmission device is provided in an embodiment of the present disclosure, including: a memory, a transceiver, a processor, where a memory is configured to store program instructions, the transceiver is configured to send and receive data under a control of the processor, the processor is configured to read the program instructions in the memory to perform:
determining a transmission parameter of a physical downlink shared channel (PDSCH), where the transmission parameter includes: a number of times N of repetition transmission and a repetition transmission mode, where N is greater than or equal to 1 and is a positive integer; and
transmitting first downlink data carried on the PDSCH, according to the transmission parameter.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the resource mapping mode is two, and the processor is configured to read the program instructions in the memory to perform:
when the PDSCH transmission and a PDCCH transmission collide on the symbols occupied by the PDCCH MO, performing a punching operation on the collided PDSCH.

Optionally, the resource mapping mode is method II, and the processor is configured to read the program instructions in the memory to perform:
when the PDSCH transmission and a PDCCH transmission collide on the symbols occupied by the PDCCH MO, performing a frequency division multiplexing on the PDSCH and the PDCCH which are collided, or
the transceiver is configured to perform:
   transmitting second downlink data carried on a PDCCH on available symbols other than the symbols occupied by the collided PDCCH MO.

Optionally, the transmission parameter is pre-agreed, or configured by a base station.

Optionally, the transmission parameter is configured by the base station;
the processor is configured to read the program instructions in the memory to perform:
indicating the transmission parameter of the PDSCH to a terminal, through a high-layer signaling and/or a physical layer dynamic signaling.

Optionally, the processor is configured to read the program instructions in the memory to perform:
when a PDSCH repetition transmission type indication is a first value, configuring the number of times of repetition transmission of the PDSCH in a semi-static mode through a Radio Resource Control (RRC) dedicated signaling;
when the PDSCH repetition transmission type indication is a second value, configuring the number of times of repetition transmission of the PDSCH through a physical layer dynamic signaling; where the PDSCH repetition transmission type indication is configured by the base station through an RRC signaling.

Optionally, the processor is configured to read the program instructions in the memory to perform:
when the PDSCH repetition transmission type indication is the second value, configuring a mapping type indication of the PDSCH in a nominal repetition time slot through an RRC dedicated signaling; where
when the mapping type indication is a third value, a number of nominal PDSCH repetition time slots is equal to a number of actual repetition time slots;
when the mapping type indication is a fourth value, the number of the nominal PDSCH repetition time slots is less than or equal to the number of the actual repetition time slots;.

Optionally, the processor is configured to read the program instructions in the memory to perform:
indicating explicitly or implicitly the number of times of repetition transmission of the PDSCH to the terminal through the physical layer dynamic signaling.

Optionally, the processor is configured to read the program instructions in the memory to perform:
indicating the number of times of repetition transmission of the PDSCH to the terminal, through a first field included in downlink control information (DCI).

Optionally, the processor is configured to read the program instructions in the memory to perform:
indicating the number of times of repetition transmission of the PDSCH to the terminal, through a Time Domain Resource Allocation (TDRA) table, where the TDRA table is pre-appointed, or pre-allocated through a special RRC signaling, and corresponds to a TDRA field carried in DCI.

Optionally, the processor is configured to read the program instructions in the memory to perform:
indicating to a terminal whether to skip a PDCCH MO in a first time interval.

Optionally, the processor is configured to read the program instructions in the memory to perform:
indicating to the terminal whether to skip the PDCCH MO in the first time interval, through a high-layer signaling and/or a physical layer dynamic signaling.

Optionally, the processor is configured to read the program instructions in the memory to perform:
indicating explicitly or implicitly to the terminal whether to skip the PDCCH MO in the first time interval through the physical layer dynamic signaling.

Optionally, the processor is configured to read the program instructions in the memory to perform:
indicating to the terminal whether to skip the PDCCH MO in the first time interval, through a second field included in DCI.

Optionally, the processor is configured to read the program instructions in the memory to perform:
indicating to the terminal whether to skip the PDCCH MO in the first time interval through a TDRA table, where the TDRA table is pre-appointed, or pre-allocated through a special RRC signaling, and corresponds to a TDRA field carried in DCI.

Optionally, the transceiver is configured to perform:
transmitting the PDSCH on a resource occupied by the skipped PDCCH MO, when the terminal is indicated to skip the PDCCH MO in the first time interval.

Optionally, the skipped PDCCH MO is an MO corresponding to a search space corresponding to a PDCCH scheduling a current PDSCH.

Optionally, the first time interval is a PDSCH transmission time.

Optionally, the transmission parameter further includes a start symbol of a start time slot of the PDSCH transmission time and a number of symbols occupied by each PDSCH transmission.

Optionally, the number of times of repetition transmission is a number of times of PDSCH repetition transmission or a number of PDSCH repetition slots.

In order to achieve the above object, a downlink channel transmission device is further provided in an embodiment of the present disclosure, including:
a parameter determining module, configured to determine a transmission parameter of a physical downlink shared channel (PDSCH), where the transmission parameter includes: a number of times N of repetition transmission and a repetition transmission mode, where N is greater than or equal to 1 and is a positive integer;
a first transmission module, configured to first downlink data carried on the PDSCH, according to the transmission parameter.

In order to achieve the above object, a downlink channel transmission device is further provided in an embodiment of the present disclosure, including: a memory, a transceiver, a processor, where the memory is configured to store program instructions, the transceiver is configured to send and receive data under a control of the processor, and the processor is configured to read the program instructions in the memory to perform:
obtaining a transmission parameter of a physical downlink shared channel (PDSCH), where the transmission parameter includes: a number of times N of repetition transmission and a repetition transmission mode, where N is greater than or equal to 1 and is a positive integer.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the transmission parameter is indicated by the base station;
the transceiver is configured to perform:
receiving a first signaling sent by the base station;
the processor is configured to read the program instructions in the memory to perform obtaining the transmission parameter of the PDSCH based on the first signaling, where the first signaling includes a high-layer signaling and/or a physical layer dynamic signaling.

Optionally, the first signaling is the physical layer dynamic signaling;
the processor is configured to read the program instructions in the memory to perform:
obtaining the number of times of repetition transmission of the PDSCH, according to an explicit indication or an implicit indication of a physical layer dynamic signaling.

Optionally, the explicit indication of the physical layer dynamic signaling is a first field included in downlink control information (DCI), and the first field is configured to indicate the number of times of repetition transmission of the PDSCH;
the implicit indication of the physical layer dynamic signaling is a Time Domain Resource Allocation (TDRA) table corresponding to a TDRA field carried in the DCI, and a first preset row of the TDRA table is configured to indicate the number of times of repetition transmission of the PDSCH.

Optionally, the processor is configured to read the program instructions in the memory to perform:
decoding first downlink data carried on the corresponding PDSCH, according to the transmission parameter.

Optionally, the resource mapping mode is method II, and the processor is configured to read the program instructions in the memory to perform:
when the PDSCH transmission and a PDCCH transmission collide on the symbols occupied by the PDCCH MO and a frequency division multiplexing is performed on the PDSCH and the PDCCH which are collided, monitoring the PDCCH on the corresponding PDCCH MO, or
when the PDSCH transmission and a PDCCH transmission collide on the symbols occupied by the PDCCH MO, monitoring the PDCCH on other PDCCH MOs than the symbols occupied by the collided PDCCH MO.

Optionally, the processor is configured to read the program instructions in the memory to perform:
determining whether to skip a PDCCH MO in a first time interval based on an indication from a base station;
when the base station indicates not to skip the PDCCH MO in the first time interval, monitoring the PDCCH MO in the first time interval;
when the base station indicates to skip the PDCCH MO in the first time interval, monitoring the PDCCH MO in other time intervals than the first time interval.

Optionally, when the base station indicates to skip the PDCCH MO in the first time interval, the skipped PDCCH MO is an MO corresponding to a search space corresponding to a PDCCH scheduling a current PDSCH.

Optionally, the transceiver is configured to perform:
receiving a second signaling sent by the base station;
the processor is configured to read the program instructions in the memory to perform:
   determining whether to skip the PDCCH MO in the first time interval according to the second signaling, where the second signaling includes a high-layer signaling and/or a physical layer dynamic signaling.

Optionally, the second signaling is the physical layer dynamic signaling;
the processor is configured to read the program instructions in the memory to perform:
determining whether the PDSCH skips the PDCCH MO in the first time interval, according to an explicit indication or an implicit indication of the physical layer dynamic signaling.

Optionally, the explicit indication of the physical layer dynamic signaling is a second field included in DCI, and the second field is configured to indicate whether to skip the PDCCH MO in the first time interval;
the implicit indication of the physical layer dynamic signaling is a Time Domain Resource Allocation (TDRA) table corresponding to a TDRA field carried in the DCI, and a second preset row or a first preset column of the TDRA table is configured to indicate whether to skip the PDCCH MO in the first time interval.

Optionally, the first time interval is a PDSCH transmission time.

Optionally, the transmission parameter further includes a start symbol of a start time slot of the PDSCH transmission time and a number of symbols occupied by each PDSCH transmission.

Optionally, the number of times of repetition transmission is a number of times of PDSCH repetition transmission or a number of PDSCH repetition slots.

A downlink channel transmission device is further provided in an embodiment of the present disclosure, including:
an obtaining module, configured to obtain a transmission parameter of a physical downlink shared channel (PDSCH), where the transmission parameter includes: a number of times N of repetition transmission and a repetition transmission mode, where N is greater than or equal to 1 and is a positive integer.

A processor-readable storage medium, storing program instructions, where the program instructions are executed by the processor to perform the downlink channel transmission method hereinabove.

The technical solution of the present disclosure at least has the following beneficial effects:

according to an embodiment of the present disclosure, the transmission parameter of the PDSCH is determined, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

### BRIEF DESCRIPTION OF THE DRAWINGS

Fig. 1 is a schematic view of a downlink transmission structure based on mini-slot.
Fig. 2 is a schematic view of a downlink channel transmission method in an embodiment of the present disclosure;
Fig. 3 is a schematic view of a PDSCH repetition transmission structure corresponding to the resource mapping mode being the second mode in an embodiment of the present disclosure;
Fig. 4 is a first schematic view of a PDSCH repetition transmission structure corresponding to the resource mapping mode being the second mode in an embodiment of the present disclosure;
Fig. 5 is a second schematic view of a PDSCH repetition transmission structure corresponding to the resource mapping mode being the second mode in an embodiment of the present disclosure;
Fig. 6 is a schematic view of a downlink transmission structure where multiple PDCCH MOs are configured for a PDCCH search space in a slot in an embodiment of the present disclosure;
Fig. 7 is a schematic view of a downlink transmission structure of slot-based PDSCH transmission in an embodiment of the present disclosure;
Fig. 8 is a first schematic view of a downlink transmission structure of slot-based PDSCH transmission in an embodiment of the present disclosure;
Fig. 9 is a second schematic view of a downlink transmission structure of slot-based PDSCH transmission in an embodiment of the present disclosure;
Fig. 10 is a second flowchart of a downlink channel transmission method in an embodiment of the present disclosure;
Fig. 11 is a first block diagram of a downlink channel transmission device in an embodiment of the present disclosure;
Fig. 12 is a first block diagram of a downlink channel transmission device in an embodiment of the present disclosure;
Fig. 13 is a second block diagram of a downlink channel transmission device in an embodiment of the present disclosure; and
Fig. 14 is a second block diagram of a downlink channel transmission device in an embodiment of the present disclosure.

### DETAILED DESCRIPTION

The term "and/or" in the embodiments of the present disclosure describes an association relationship of associated objects, and indicates that three relationships may exist, for example, A and/or B, and may indicate: a exists alone, A and B exist simultaneously, and B exists alone. The character "/" generally indicates that the former and latter associated objects are in an "or" relationship.

In the embodiments of the present application, the term "plurality" means two or more, and other terms are similar thereto.

The technical solutions in the embodiments of the present application will be clearly and completely described below with reference to the drawings in the embodiments of the present application, and it is obvious that the described embodiments are only some embodiments of the present application, and not all embodiments. All other embodiments obtained by a person of ordinary skill in the art based on the embodiments in the present application without making any creative effort belong to the protection scope of the present application.

Before the embodiments of the present application are described in detail, the scheduling method is briefly known.

A slot based scheduling mode, i.e., a scheduling mode of 14 OFDM symbols, is supported in the NR. In order to reduce the transmission latency, the NR standard also supports a non-slot based scheduling method, that is, supports micro-slot (mini-slot) scheduling.

Based on the mini-slot scheduling mode, the base station may schedule X (X =2, 4, 7) OFDM symbols. For XR traffic, mini-slot based scheduling will be reused in order to reduce latency. For mini-slot scheduling, the base station configures multiple PDCCH (Physical Downlink Control Channel) MOs (Monitoring Occasions) for the terminal in one slot, and the terminal detects the PDCCH on each PDCCH MO.

In an example of a downlink transmission structure based on a mini-slot, as shown in Fig. 1, three time slots in each PDCCH detection period are configured as downlink time slots or are semi-statically configured as flexible flex time slots by SIB (System Information Block) 1 or RRC (Radio Resource Control) signaling, and a base station configures a PDCCH monitoring mode for a terminal on each time slot by using dedicated signaling. In this example, each slot includes 14 OFDM symbols, where corresponding PDCCH Monitoring Opportunities (MOs) are located at 1, 2 and 8, 9 symbols, that is, each slot includes 2 PDCCH MOs in this example, and the PDCCH schedules PDSCH (Physical Downlink Shared Channel) in this slot, and even corresponding HARQ-ACK (Hybrid automatic repeat request acknowledgement) may complete feedback in this slot, thereby facilitating transmission latency reduction.

In addition, in NR downlink transmission, in order to enlarge coverage and improve reliability, the NR standardizes a slot aggregation technique at Rel-15 stage, that is, one PDCCH can schedule a plurality of continuous slots. The base station configures a number of aggregation slots, PDSCH-aggregation factor =2 or 4 or 8, for the PDSCH by using dedicated RRC signaling, and the base station repeatedly transmits coded bits of one TB (Transport Block) in the PDSCH-aggregation factor slots, where PDSCH transmission resources in each slot are consistent with PDCCH scheduling, that is, the transmission resources in the first slot are repeated. The difference is that the RV (Redundancy Version) of the corresponding PDSCH in each slot may be different.

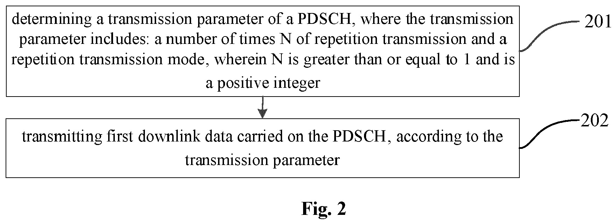

As shown in Fig. 2, which is a schematic view of a downlink channel transmission method in an embodiment of the present disclosure, applied to a base station and including:
Step 201: determining a transmission parameter of a physical downlink shared channel (PDSCH), where the transmission parameter includes: a number of times N of repetition transmission and a repetition transmission mode, wherein N is greater than or equal to 1 and is a positive integer;
in this step, when the number of repetition transmission times N =1, it is described that PDSCH transmission is performed only once, and no additional repetition transmission is required.

Optionally, the number of times of repetition transmission is a number of times of PDSCH repetition transmission or a number of PDSCH repetition slots.

It should be noted that, if the base station adopts a slot-based PDSCH scheduling method, the number of times of repetition transmission is the number of PDSCH repetition time slots; when the base station adopts a PDSCH scheduling mode based on min-slot, the repetition transmission times are the PDSCH repetition transmission times.

Optionally, the transmission parameter further includes a start symbol of a start time slot of the PDSCH transmission and a number L of symbols occupied by each PDSCH transmission.

Optionally, the transmission parameter further include: the start symbol S of the starting time slot of the PDSCH transmission and the number L of the symbols occupied by the PDSCH in one transmission.

It should be noted that, when the base station adopts a PDSCH scheduling method based on min-slot, optionally, L is less than 7, for example, the PDCCH and the PDSCH occupy 2, 4 or 7 OFDM symbols together, that is, exactly one min-slot; the value of L may also be greater than 7 and less than 14, while scenarios where L > 14 are not excluded.

Step 202: transmitting first downlink data carried on the PDSCH, according to the transmission parameter.

According to an embodiment of the present disclosure, the transmission parameter of the PDSCH is determined, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

Optionally, the repetition transmission mode is a resource mapping mode between a PDSCH repetition transmission and a physical downlink control channel monitoring occasion (PDCCH MO).

Specifically, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Here, the repeated PDSCH specifically refers to a PDSCH transmission greater than once, that is, corresponds to a case where the number of times of repetition transmission N > 1; the PDSCH without the qualifier "repeated" specifically refers to the case where the PDSCH is transmitted only once, i.e., corresponding to the number of times of repetition transmission N = 1.

Here, when the resource mapping mode is the method I, the PDSCH or the repeated PDSCH may not overlap with the PDCCH MO in the first time interval, and it may be understood that the PDSCH or the repeated PDSCH does not occupy the PDCCH MO in the first time interval. An example is described below.

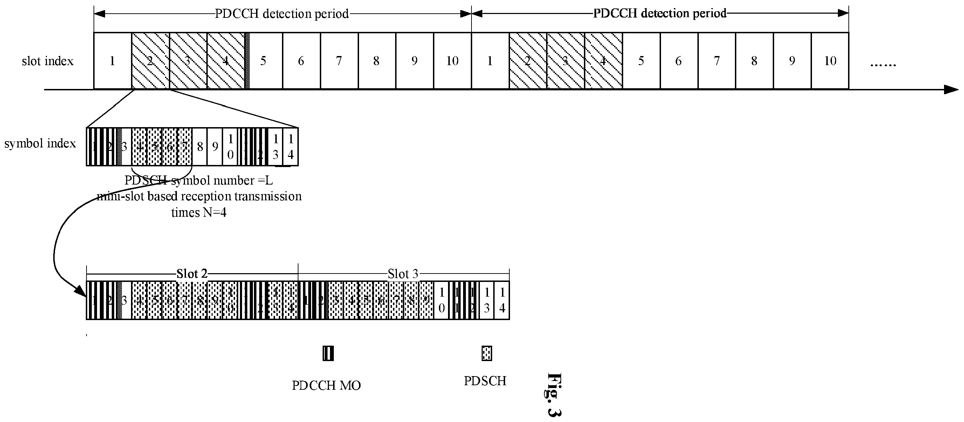

In a first example, as shown in Fig. 3, there are multiple PDSCH transmission slots in one PDCCH search space configuration period, which may be downlink slots or semi-statically configured flexible slots. Each PDSCH transmission time slot supports mini-slot transmission, in each time slot, a base station transmits PDSCH with N x L symbols on available resources according to the repetition transmission times N, starting from the initial symbol of the PDSCH initial time slot, and the PDSCH with 16 symbols is transmitted corresponding to this figure, where N represents the repetition transmission times, and L represents the number of symbols occupied by each transmission of the PDSCH.

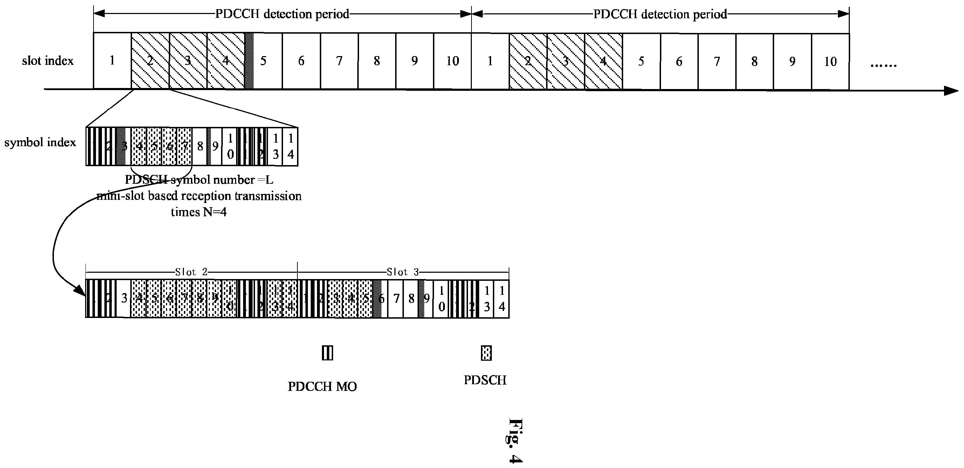

In the Fig. 4, starting from the start symbol of the PDSCH start slot, that is, the fourth symbol in slot 2, 4 symbols for transmitting PDSCH, after 4 repetition transmissions, occupy slot 2 and slot 3, the resources for the PDSCH transmission /position are skipped or does not include the OFDM symbols occupied by the PDCCH MO of the subsequent mini-slot.

The transmission scheme based on the first mode has the advantages that since the total number of symbols transmitted by the PDSCH is N × L, that is, the total number of symbols of repetition transmission in the signaling notification (nominal), repetition transmission performance is ensured, and meanwhile, since the PDSCH skips OFDM symbols occupied by the PDCCH MOs in the current slot or the following slot during transmission, the terminal can continue to detect the PDCCH at the PDCCH MOs, for example, the terminal supporting XR service and eMBB service thereof or URLLC service thereof can be scheduled on the PDCCH MOs in time.

Optionally, the resource mapping mode is method II, and the method further includes:
when the PDSCH transmission and a PDCCH transmission collide on the symbols occupied by the PDCCH MO, performing a punching operation on the collided PDSCH.

Here, when the resource mapping mode is method II, the PDSCH or the repeated PDSCH may partially overlap or completely overlap the PDCCH MO in the first time interval, and the PDSCH or the repeated PDSCH may occupy the PDCCH MO in the first time interval.

In a second example, as shown in Fig. 4, there are multiple PDSCH transmission slots within one PDCCH search space configuration period. In each time slot, the base station transmits PDSCH on available resources starting from the start symbol of the starting time slot of PDSCH according to the number of times of repetition transmission N, and PDSCH of 16 symbols is transmitted corresponding to this figure.

In the Fig. 4, starting from the starting symbol of the PDSCH starting slot, that is, the fourth symbol in slot 2, 4 symbols for transmitting PDSCH, after 4 repetition transmissions, occupy slot 2 and slot 3, the position of the PDSCH includes the OFDM symbols occupied by the PDCCH MO in subsequent mini-slots.

However, when a PDSCH needs to be punctured on PDCCH transmission resources allocated in the PDCCH search space in PDCCH transmission symbols, that is, when a PDSCH is transmitted on PDCCH transmission resources occupied by a PDCCH MO, if a PDSCH transmission resource collides with the PDCCH, the PDSCH is punctured, that is, a corresponding PDSCH is deleted, that is, punctured, on the resource where the PDSCH transmission resource collides with the PDCCH.

If the PDSCH transmission is collided with the PDCCH, after the PDSCH is punctured, the number of PDSCH transmission symbols may be less than N x L; it may also be equal to N x L.

It should be noted that due to the puncturing operation, the number of PDSCH transmission symbols in the present disclosure cannot be guaranteed to be N × L, i.e., the total number of symbols of repetition transmission in the signaling notification (nominal) cannot be guaranteed.

The implementation mode has the advantages that the transmission latency of the PDSCH can be reduced without skipping symbols occupied by the PDCCH MO, and meanwhile, the punching operation is adopted for the PDSCH, so that the PDCCH performance is guaranteed not to be lost, other services can be scheduled while XR is transmitted, and the flexibility of the base station is guaranteed.

As another optional implementation mode, the resource mapping mode is a second mode, and the method in the embodiment of the present disclosure further includes:
when the PDSCH transmission and a PDCCH transmission collide on the symbols occupied by the PDCCH MO, performing a frequency division multiplexing on the PDSCH and the PDCCH which are collided, or transmitting second downlink data carried on a PDCCH on available symbols other than the symbols occupied by the collided PDCCH MO.

Here, when PDSCH transmission and PDCCH transmission collide on symbols occupied by the PDCCH MOs, a frequency division multiplexing is performed on the collided PDSCH and PDCCH, which means that PDCCH symbols are occupied when PDSCH transmission resources are mapped, but PDCCH frequency domain resources are not occupied, that is, PDSCH is frequency division multiplexed with PDCCH on symbols occupied by PDCCH, which does not affect the terminal to detect PDCCH on the corresponding PDCCH MO, and does not lose PDSCH performance.

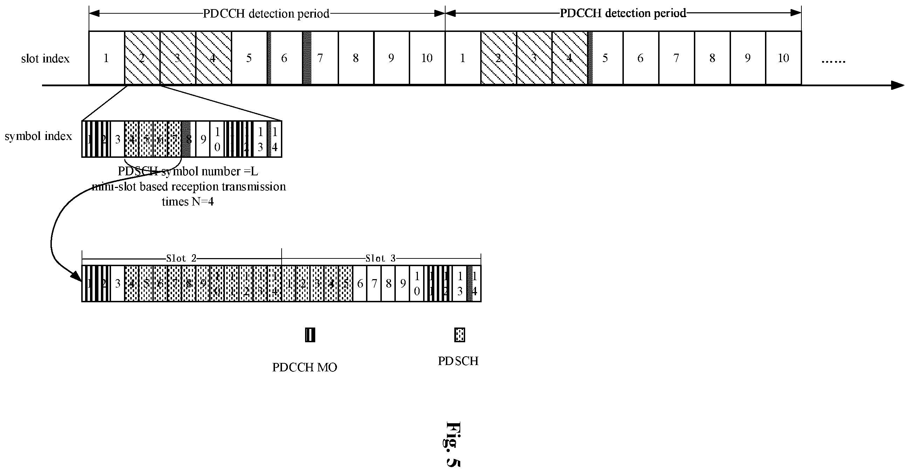

In a third example, as shown in Fig. 5, there are multiple PDSCH transmission slots within one PDCCH search space configuration period. In each time slot, the base station repeats PDSCH transmission on available resources starting from the start symbol of the starting time slot of PDSCH according to the number of times of repetition transmission N, and PDSCH of 16 symbols is transmitted corresponding to this figure.

In the Fig. 4, starting from the start symbol of the PDSCH start slot, that is, the fourth symbol in slot 2, 4 symbols for transmitting PDSCH, after 4 repetition transmissions, occupy slot 2 and slot 3, and the PDSCH transmission position includes the OFDM symbol occupied by the PDCCH MO of the subsequent mini-slot, but the PDSCH is not punctured on the PDCCH transmission resource configured in the PDCCH search space; meanwhile, the base station does not transmit a PDCCH on the above PDCCH MO colliding with the PDSCH, but transmits a PDCCH on PDCCH MOs other than the collided PDCCH MO.

The terminal does not monitor the PDCCH on the PDCCH MO colliding with the PDSCH.

Here, the number of PDSCH transmission symbols in this scheme may be equal to or less than N × L. N x L is the total number of symbols of repetition transmission in the signaling notification (nominal).

The implementation method has the advantages that for XR services such as cloud games, the latency requirement is high, only mini-slot scheduling can be adopted but the throughput is high, at the moment, the eMB service does not need to be transmitted in the slot transmitted by the PDSCH, PDCCH resources configured in the original min-slot are reserved at the moment, firstly, unnecessary overhead can be caused, and on the other hand, the terminal needs to continuously monitor the PDCCH based on the mini-slot, so that extra power loss is caused. Finally, the direct use of the PDCCH resource for PDSCH transmission is not only beneficial for system performance improvement, but also beneficial for transmission latency reduction, as compared to the example two.

It should be noted that, all three examples above take L < 7 as an example, and it can be further described that the base station configures PDSCH repetition transmission parameters, such as a start symbol S and a number of symbols L occupied by one transmission, in the TDRA table by using RRC signaling, and the base station can configure PDSCH repetition transmission times N by using physical layer dynamic signaling or RRC signaling.

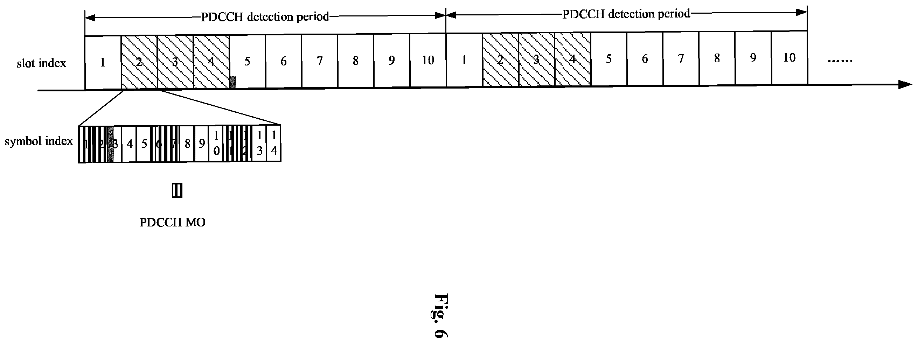

The above three examples are all based on the case of min-slot scheduled PDSCH repetition transmission; the basic assumption is that: in order to support the low-latency transmission of the XR service, the base station configures a search space beneficial to mini-slot scheduling by using RRC signaling, that is, multiple PDCCH MOs are configured for the PDCCH search space in one slot, and multiple PDSCH transmission slots can be configured in one configuration period, as shown in Fig. 6, which is beneficial to support min-slot scheduling, thereby reducing the XR transmission latency.

However, the actual scheduling of the base station is flexible, and the base station may adopt mini-slot based scheduling as described in example one, example two, and example three, or may transmit a PDCCH using a certain PDCCH MO in a slot to perform slot based scheduling. No matter the slot-based scheduling or the mini-slot-based scheduling is adopted, the position of the number of the PDCCH MOs corresponding to the search space reconfigured by the base station through the RRC does not change.

For slot-based scheduling, optionally, the method in example three may be adopted, where the base station does not send a PDCCH on the PDCCH MO colliding with the PDSCH; the terminal does not monitor the PDCCH on the PDCCH MO colliding with the PDSCH.

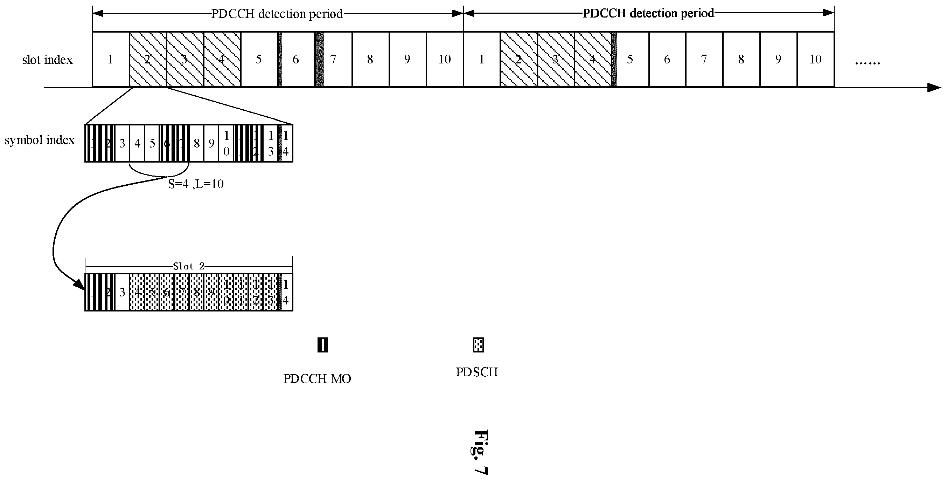

Furthermore, optionally, the base station transmits PDSCH on the resources occupied by the PDCCH MO not for transmitting PDCCH. In one example, as shown in Fig. 7, the PDSCH start symbol S is symbol 4, the PDSCH symbol length L is 10, and the base station transmits PDSCH on the resources occupied by the PDCCH MO. The scheme also has the beneficial effects of being beneficial to saving electricity of the terminal and reducing the system overhead.

For slot-based scheduling, similar methods as in example one and example two may also be employed, where symbols occupied in PDSCH transmission do not include symbols occupied by the PDCCH MOs, or symbols occupied in PDSCH transmission include some or all of the symbols occupied by the PDCCH MOs.

It should be noted that the above is the slot-based PDSCH scheduling, and may also include slot-based PDSCH repetition transmission, and the specific method is consistent with the min-slot-based scheduling, which is not described herein again.

Optionally, the transmission parameter is pre-agreed or configured by the base station.

The transmission parameter is configured by a base station; after method step 201 of an embodiment of the present disclosure, the method of an embodiment of the present disclosure further comprises:
indicating the transmission parameter of the PDSCH to the terminal through a high-layer signaling and/or a physical layer dynamic signaling.

Optionally, the high-layer signaling includes: RRC signaling.

Optionally, the physical layer dynamic signaling comprises PDCCH.

Optionally, the indicating, by high-layer signaling and/or physical layer dynamic signaling, the transmission parameter of PDSCH transmission by the terminal includes:
when a PDSCH repetition transmission type indication is a first value, configuring the number of times of repetition transmission of the PDSCH in a semi-static mode through a Radio Resource Control (RRC) dedicated signaling;
here, the PDSCH repetition transmission type indicates, for example, PDSCH-repetition-type.

When the repetition transmission type of the PDSCH indicates a first value, for example, PDSCH-repeat-type = A, the base station adopts a slot-based PDSCH scheduling mode, utilizes RRC dedicated signaling to semi-statically configure the number N of repetition time slots of the PDSCH, and the optional base station adopts a Rel-15 slots aggregation method to repeatedly transmit the PDSCH in the N time slots.

At this time, the terminal decodes the corresponding PDSCH according to the number of repeated slots indicated by the physical layer dynamic signaling (e.g., PDCCH).

When the PDSCH repetition transmission type indication is a second value, configuring the number of times of repetition transmission of the PDSCH through a physical layer dynamic signaling; where the PDSCH repetition transmission type indication is configured by the base station through an RRC signaling.

When the PDSCH repetition transmission type indication is a second value, e.g., PDSCH-repetition-type = B, the base station adopts a PDSCH scheduling mode based on min-slot and configures the PDSCH repetition transmission times based on min-slot through the dynamic signaling of a physical layer. And the base station indicates the number of times of repetition transmission of the PDSCH through the dynamic signaling of the physical layer, and sends the PDSCH according to the number of times of repetition transmission of the PDSCH indicated by the DCI.

When the PDSCH repetition transmission type indication is the second value, configuring a mapping type indication of the PDSCH in a nominal repetition time slot through an RRC dedicated signaling;
when the mapping type indication is a third value, a number of nominal PDSCH repetition time slots is equal to a number of actual repetition time slots;
when the mapping type indication is a fourth value, the number of the nominal PDSCH repetition time slots is less than or equal to the number of the actual repetition time slots.

It should be noted that, when the PDSCH repetition transmission type indication is a second value, for example, PDSCH-repetition-type = B, optionally, the base station may also configure

the mapping type indication of the repeated PDSCH in the nominal repetition time slot (i.e., the signaled repetition time slot) through a dedicated signaling configuration, for example, PDSCH-repetition-mapping-type.

When the mapping type of the PDSCH in the nominal repetition slot is a third value, for example, PDSCH-repetition-mapping-type = a, the base station configures the number N of PDSCH repetition slots by using a physical layer dynamic signaling (such as PDCCH), where the number of nominal PDSCH repetition transmission slots is equal to the number of actual repetition transmission slots, for example, the transmission resource in the repetition slot is the same as the first slot;
when the mapping type of the PDSCH in the nominal repetition slot is a fourth value, for example, PDSCH-repetition-mapping-type = B, the base station physical layer dynamic signaling (e.g., PDCCH) configures the number of PDSCH repetition transmission times N, and the number of nominal PDSCH repetition transmission slots may be smaller than the number of actual repetition transmission slots, for example, the mapping mode of the PDSCH in the repetition slot is different from the mapping mode of the PDSCH in the first slot.

Optionally, the indicating the transmission parameter of the PDSCH to the terminal through the physical layer dynamic signaling includes:
indicating explicitly or implicitly the number of times of repetition transmission of the PDSCH to the terminal through the physical layer dynamic signaling.

Here, the base station indicates to the terminal through a physical layer dynamic signaling (such as PDCCH) the number N of repetition transmission of the PDSCH, and the base station transmits the corresponding PDSCH in M time slots, where M is less than or equal to N. That is, the number of time slots for PDSCH transmission is less than or equal to the number of times of repetition transmission of PDSCH configured by physical layer dynamic signaling. Namely, the number of the nominal PDSCH repetition transmission slots is less than or equal to the number of the actual repetition transmission slots.

The case that the number of the nominal PDSCH repetition transmission slots is equal to the number of the actual repetition transmission slots is briefly described below.

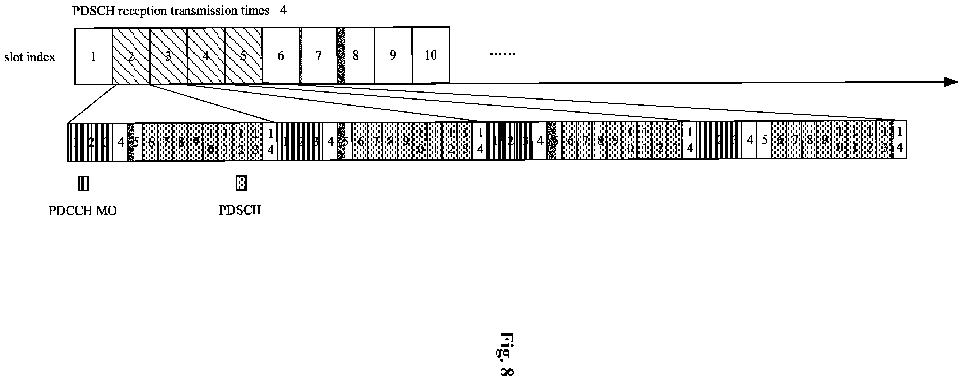

As shown in Fig. 8, when the base station adopts the slot-based PDSCH scheduling method, the number of time slots for actual PDSCH transmission is equal to the number of repetition time slots of the PDSCH configured by the physical layer dynamic signaling. At this time, optionally, the PDSCH transmission resource in each slot is a repetition of the transmission resource in the first slot.

The case that the number of the nominal PDSCH repetition transmission slots is less than the number of actual repetition transmission slots is briefly described below

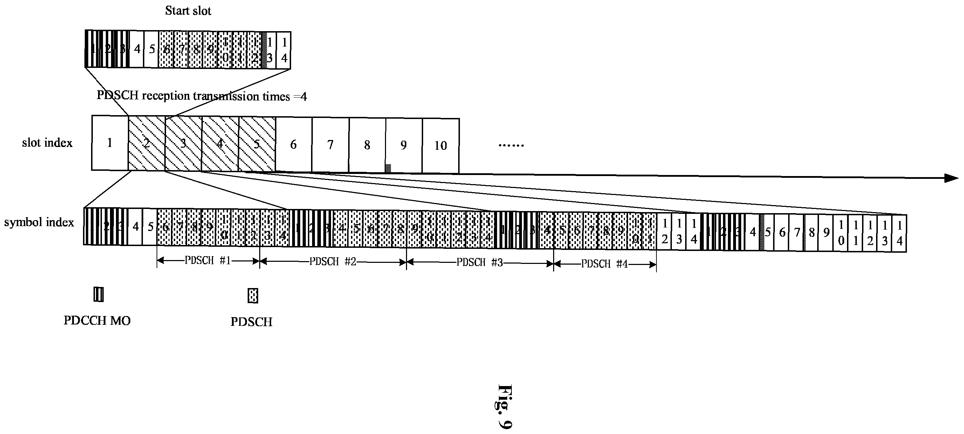

As shown in Fig. 9, when the base station adopts a slot-based PDSCH scheduling method, the number of time slots for actual PDSCH transmission is less than the number of nominal PDSCH repetition time slots configured by physical layer dynamic signaling. That is, the base station indicates the terminal through the physical layer dynamic signaling for the number of times of the PDSCH repetition transmission (here, the number of repeated slots), in the figure, the start slot of the PDSCH transmission is slot 2, the start symbol S is 6, that is, the PSDCH is transmitted from the 6th symbol of slot 2, and the number L of symbols included in the PDSCH of the start slot is 7.

The base station continuously transmits repeated PDSCH on available symbols other than PDCCH from the ending symbol of the first PDSCH, namely the PDSCH mapping mode in the repeated slots is different from the PDSCH mapping mode in the first slots.

Optionally, the number of PDSCH symbols transmitted continuously by the base station is equal to the number of symbols occupied in the initial slot multiplied by the number of times of repetition transmission N (it can be seen from the figure that N = 4), i.e., the PDSCH transmits N × L =4 × 7=28 symbols in total. Optionally, the number of OFDM symbols occupied between the start symbol and the ending symbol of the PDSCH is equal to N × L excluding the number of symbols occupied by the PDCCH.

Here, it is obvious that compared with Fig. 8, the scheme corresponding to Fig. 9 brings the beneficial effect that the NR Rel-15 protocol is reused as much as possible, but the time slot repetition number is dynamically changed, and the downlink transmission latency and the system overhead are reduced.

Optionally, the indicating explicitly the number of times of repetition transmission of the PDSCH to the terminal through the physical layer dynamic signaling includes:
indicating the number of times of repetition transmission of the PDSCH to the terminal, through a first field included in downlink control information (DCI).

Here, in other words, there is an explicit field in the DCI to indicate the number of repetition PDSCH transmission.

In another alternative, the indicating implicitly the number of times of repetition transmission of the PDSCH to the terminal through the physical layer dynamic signaling includes:
indicating the number of times of repetition transmission of the PDSCH to the terminal, through a Time Domain Resource Allocation (TDRA) table, where the TDRA table is pre-appointed, or pre-allocated through a special RRC signaling, and corresponds to a TDRA field carried in DCI.

Optionally, the number of times of repetition transmission of the PDSCH is carried in a TDRA table, and the base station implicitly indicates the number of times of repetition transmission of the PDSCH by a TDRA field carried in the DCI corresponding to a certain row of the TDRA table.

When the base station schedules the PDSCH, if the TDRA field value in the DCI is m, the base station corresponds to m +1 rows of the preset TDRA table. That is, for example, the value of the TDRA field is m, and the number of repetition PDSCH transmission can be indicated by using the TDRA field corresponding to row m +1 of the TDRA table.

In an example, the TDRA table may be as shown in the following table, where K₀ represents an offset of the PDSCH with respect to the time slot in which the PDCCH is located, S represents a corresponding start symbol of the PDSCH in the time slot, and L represents a symbol length allocated for the PDSCH in the time slot.

| row index | demodulation reference signal-type A-positon (dmrs-TypeA-Position) | (PDSCH mapping type) | K₀ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 8 |
| | 3 | Type A | 0 | 3 | 7 |
| 4 | 2 | Type A | 0 | 2 | 6 |
| | 3 | Type A | 0 | 3 | 5 |
| 5 | 2 | Type A | 0 | 2 | 4 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

Optionally, the method of the embodiment of the present disclosure further includes:
indicating to a terminal whether to skip a PDCCH MO in a first time interval.

This step may specifically include:
indicating to the terminal whether to skip the PDCCH MO in the first time interval, through a high-layer signaling and/or a physical layer dynamic signaling.

Optionally, the high-layer signaling includes: RRC signaling.

Optionally, the physical layer dynamic signaling comprises PDCCH.

Here, it is assumed that the high-layer signaling is SkippingMOorNot. If SkippingMOorNot = true indicates that the terminal intends to skip the PDCCH MO in the first time interval, SkippingMOorNot = false indicates that the terminal does not skip the PDCCH MO in the first time interval. The terminal determines whether to monitor the PDCCH on the corresponding MO in the first time interval according to the indication of the base station

Optionally, the indicating to the terminal whether to skip the PDCCH MO in the first time interval through the physical layer dynamic signaling includes:
indicating explicitly or implicitly to the terminal whether to skip the PDCCH MO in the first time interval through the physical layer dynamic signaling.

Optionally, the indicating explicitly to the terminal whether to skip the PDCCH MO in the first time interval through the physical layer dynamic signaling includes:
indicating to the terminal whether to skip the PDCCH MO in the first time interval, through a second field included in DCI.

Here, there is an explicit field in the DCI to indicate PDCCH monitoring within PDSCH repetition transmission resources.

In another optional aspect, the indicating implicitly to the terminal whether to skip the PDCCH MO in the first time interval through the physical layer dynamic signaling includes:
indicating to the terminal whether to skip the PDCCH MO in the first time interval through a TDRA table, where the TDRA table is pre-appointed, or pre-allocated through a special RRC signaling, and corresponds to a TDRA field carried in DCI.

Here, the base station implicitly indicates whether to skip PDCCH monitoring within PDSCH repetition transmission resources by corresponding the TDRA field in the DCI to a certain row or a certain column of the TDRA table.

For example, the base station may add an indication in the downlink TDRA table by using RRC signaling, such as adding a list I in the downlink TDRA. For example, the indication may be 1 bit 0 or 1, the specific meaning of which is shown in the following table.

The base station can flexibly configure whether the terminal needs to monitor the PDCCH according to the service, and one bit can flexibly indicate any number of PDCCH MOs which the terminal needs to skip.

| | |
|---|---|
| 1 | the terminal does not monitor the PDCCH during the repetition transmission time of the PDSCH or the PDSCH |
| 0 | the terminal monitors the PDCCH during the repetition transmission time of the PDSCH or the PDSCH |

The row index of the downlink TDRA table can be indicated by the downlink TDRA field in the PDCCH. The advantage of this solution is that the base station can flexibly configure whether the terminal needs to monitor the above PDCCH according to the service, and one bit can flexibly indicate any number of PDCCH MOs that the terminal needs to skip.

Optionally, subsequent to the indicating to the terminal whether to skip the PDCCH MO in the first time interval, the method further includes:
transmitting the PDSCH on a resource occupied by the skipped PDCCH MO, when the terminal is indicated to skip the PDCCH MO in the first time interval.

Optionally, the skipped PDCCH MO is an MO corresponding to a search space corresponding to a PDCCH scheduling a current PDSCH.

Optionally, the first time interval is a PDSCH transmission time.

It should be noted that the first time interval mentioned in the embodiments of the present disclosure is a PDSCH or PDSCH repetition transmission time.

It should be noted that, when the terminal is instructed to skip a PDCCH MO in the first time interval and a PDCCH MO where DCI for scheduling the current PDSCH is located in the first time interval, the skipped PDCCH MO does not include the PDCCH MO where DCI for scheduling the PDSCH is located; that is, the PDCCH MO in which the DCI for the scheduled PDSCH is located is excluded, that is, the PDCCH MO is not counted as one of the PDCCH MOs that the terminal needs to skip.

According to the downlink channel transmission method in the embodiment of the present disclosure, the transmission parameter of the PDSCH is determined, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

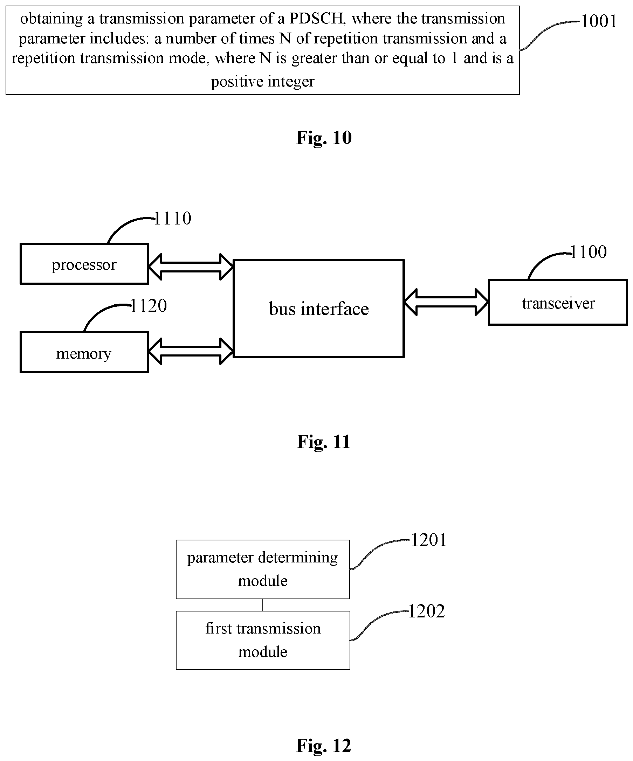

As shown in Fig. 10 which is a second flowchart of a downlink channel transmission method in an embodiment of the present disclosure, the method is applied to a terminal and includes:
Step 1001: obtaining a transmission parameter of a physical downlink shared channel (PDSCH), where the transmission parameter includes: a number of times N of repetition transmission and a repetition transmission mode, where N is greater than or equal to 1 and is a positive integer.

In this step, when the number of times of repetition transmission N =1, it is indicated that the base station performs PDSCH transmission only once.

Optionally, the transmission parameter further includes a start symbol S of a start time slot of the PDSCH transmission and a number N of symbols occupied by each PDSCH transmission.

Optionally, the number of times of repetition transmission is a number of times of PDSCH repetition transmission or a number of PDSCH repetition slots.

It should be noted that, if the base station adopts a slot-based PDSCH scheduling method, the number of times of repetition transmission is the number of PDSCH repetition time slots; when the base station adopts a PDSCH scheduling mode based on min-slot, the repetition transmission times are the PDSCH repetition transmission times.

According to an embodiment of the present disclosure, the transmission parameter of the PDSCH is obtained, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

Optionally, the transmission parameter is pre-agreed or indicated by the base station.

Optionally, the repetition transmission mode is a resource mapping mode between a PDSCH repetition transmission and a physical downlink control channel monitoring occasion (PDCCH MO).

Specifically, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Here, the repeated PDSCH specifically refers to more than one PDSCH transmission, that is, corresponds to a case where the number of times of repetition transmission N > 1; the PDSCH without the qualifier "repeated" specifically refers to the case where the PDSCH is transmitted only once, i.e., corresponding to the number of times of repetition transmission N = 1.

Optionally, the transmission parameter is indicated by a base station; the method steps 1001 of the embodiment of the present disclosure may specifically include:
receiving a first signaling sent by the base station;
obtaining the transmission parameter of the PDSCH based on the first signaling, where the first signaling includes a high-layer signaling and/or a physical layer dynamic signaling.

Further, the first signaling is the physical layer dynamic signaling;
the obtaining the transmission parameter of the PDSCH based on the first signaling includes:
obtaining the number of times of repetition transmission of the PDSCH, according to an explicit indication or an implicit indication of a physical layer dynamic signaling.

Optionally, the explicit indication of the physical layer dynamic signaling is a first field included in downlink control information (DCI), and the first field is configured to indicate the number of times of repetition transmission of the PDSCH;
the implicit indication of the physical layer dynamic signaling is a Time Domain Resource Allocation (TDRA) table corresponding to a TDRA field carried in the DCI, and a first preset row of the TDRA table is configured to indicate the number of times of repetition transmission of the PDSCH.

Optionally, the method of the embodiment of the present disclosure may further include:
decoding first downlink data carried on the corresponding PDSCH, according to the transmission parameter.

Optionally, the resource mapping mode is method II, and the method further includes:
when the PDSCH transmission and a PDCCH transmission collide on the symbols occupied by the PDCCH MO and a frequency division multiplexing is performed on the PDSCH and the PDCCH which are collided, monitoring the PDCCH on the corresponding PDCCH MO, or
when the PDSCH transmission and a PDCCH transmission collide on the symbols occupied by the PDCCH MO, monitoring the PDCCH on other PDCCH MOs than the symbols occupied by the collided PDCCH MO.

Here, when the PDSCH transmission and a PDCCH transmission collide on the symbols occupied by the PDCCH MO and a frequency division multiplexing is performed on the PDSCH and the PDCCH which are collided, the PDCCH symbols are occupied but PDCCH frequency domain resources are not occupied when PDSCH transmission resource mapping is performed, that is, PDSCH is frequency division multiplexed with PDCCH on PDCCH occupied symbols, which does not affect the detection of PDCCH by the terminal on the corresponding PDCCH MO and does not lose PDSCH performance.

When the PDSCH transmission and a PDCCH transmission collide on the symbols occupied by the PDCCH MO, monitoring the PDCCH on other PDCCH MOs than the symbols occupied by the collided PDCCH MO, that means the terminal does not monitor the PDCCH on the PDCCH MOs in collision with the PDSCH.

Optionally, the method of the embodiment of the present disclosure may further include:
determining whether to skip a PDCCH MO in a first time interval based on an indication from a base station;
when the base station indicates not to skip the PDCCH MO in the first time interval, monitoring the PDCCH MO in the first time interval;
when the base station indicates to skip the PDCCH MO in the first time interval, monitoring the PDCCH MO in other time intervals than the first time interval

Optionally, when the base station indicates to skip the PDCCH MO in the first time interval, the skipped PDCCH MO is an MO corresponding to a search space corresponding to a PDCCH scheduling a current PDSCH.

Optionally, the determining, by the base station, whether to skip the PDCCH MO in the first time interval includes:
receiving a second signaling sent by the base station;
determining whether to skip the PDCCH MO in the first time interval according to the second signaling, where the second signaling includes a high-layer signaling and/or a physical layer dynamic signaling.

Optionally, the second signaling is the physical layer dynamic signaling;
the determining whether to skip the PDCCH MO in the first time interval according to the second signaling includes:
determining whether the PDSCH skips the PDCCH MO in the first time interval, according to an explicit indication or an implicit indication of the physical layer dynamic signaling.

Optionally, the explicit indication of the physical layer dynamic signaling is a second field included in DCI, and the second field is configured to indicate whether to skip the PDCCH MO in the first time interval;
the implicit indication of the physical layer dynamic signaling is a Time Domain Resource Allocation (TDRA) table corresponding to a TDRA field carried in the DCI, and a second preset row or a first preset column of the TDRA table is configured to indicate whether to skip the PDCCH MO in the first time interval.

Optionally, the first time interval is a PDSCH transmission time.

It should be noted that the first time interval mentioned in the embodiments of the present disclosure is a PDSCH or PDSCH repetition transmission time.

It should be noted that, when the terminal is instructed to skip a PDCCH MO in the first time interval and a PDCCH MO where DCI for scheduling the current PDSCH is located in the first time interval, the skipped PDCCH MO does not include the PDCCH MO where DCI for scheduling the PDSCH is located; that is, the PDCCH MO in which the DCI for the scheduled PDSCH is located is excluded, that is, the PDCCH MO is not counted as one of the PDCCH MOs that the terminal needs to skip.

According to the downlink channel transmission method in the embodiment of the present disclosure, the transmission parameter of the PDSCH is obtained, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

As shown in Fig. 11, an embodiment of the present disclosure further provides a downlink channel transmission device, including: memory 1120, transceiver 1100, processor 1110: a memory 1120 for storing program instructions; a transceiver 1100 for sending and receiving data under the control of the processor 1110; a processor 1110 for reading the program instructions in the memory 1120 and performing the following operations:
determining a transmission parameter of a physical downlink shared channel (PDSCH), where the transmission parameter includes: a number of times N of repetition transmission and a repetition transmission mode, where N is greater than or equal to 1 and is a positive integer; and
transmitting first downlink data carried on the PDSCH, according to the transmission parameter.

In Fig. 11, the bus architecture may include any number of interconnected buses and bridges, with one or more processors, represented by the processor 1110, and various circuits, represented by the memory 1120, being linked together. The bus architecture may also link together various other circuits such as peripherals, voltage regulators, power management circuits, and the like, which are well known in the art, and therefore, will not be described any further herein. The bus interface provides an interface. The transceiver 1100 may be a plurality of elements including a transmitter and a receiver that provide a means for communicating with various other apparatus over a transmission medium including wireless channels, wired channels, fiber optic cables, and the like. The processor 1110 is responsible for managing the bus architecture and general processing, and the memory 1120 may store data used by the processor 1110 in performing operations.

The processor 1110 may be a Central Processing Unit (CPU), an Application Specific Integrated Circuit (ASIC), a Field-Programmable Gate Array (FPGA), or a Complex Programmable Logic Device (CPLD), and may also have a multi-core architecture.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the resource mapping mode is two, and the processor 1110 is configured to read the program instructions in the memory to perform:
when the PDSCH transmission and a PDCCH transmission collide on the symbols occupied by the PDCCH MO, performing a punching operation on the collided PDSCH.

Optionally, the resource mapping mode is method II, and the processor 1110 is configured to read the program instructions in the memory to perform:
when the PDSCH transmission and a PDCCH transmission collide on the symbols occupied by the PDCCH MO, performing a frequency division multiplexing on the PDSCH and the PDCCH which are collided, or
the transceiver 1100 is configured to perform:
   transmitting second downlink data carried on a PDCCH on available symbols other than the symbols occupied by the collided PDCCH MO.

Optionally, the transmission parameter is pre-agreed, or configured by a base station.

Optionally, the transmission parameter is configured by the base station;
the processor 1110 is configured to read the program instructions in the memory to perform:
indicating the transmission parameter of the PDSCH to a terminal, through a high-layer signaling and/or a physical layer dynamic signaling.

Optionally, the processor 1110 is configured to read the program instructions in the memory to perform:
when a PDSCH repetition transmission type indication is a first value, configuring the number of times of repetition transmission of the PDSCH in a semi-static mode through a Radio Resource Control (RRC) dedicated signaling;
when the PDSCH repetition transmission type indication is a second value, configuring the number of times of repetition transmission of the PDSCH through a physical layer dynamic signaling; where the PDSCH repetition transmission type indication is configured by the base station through an RRC signaling.

Optionally, the processor 1110 is configured to read the program instructions in the memory to perform:
when the PDSCH repetition transmission type indication is the second value, configuring a mapping type indication of the PDSCH in a nominal repetition time slot through an RRC dedicated signaling; where
when the mapping type indication is a third value, a number of nominal PDSCH repetition time slots is equal to a number of actual repetition time slots;
when the mapping type indication is a fourth value, the number of the nominal PDSCH repetition time slots is less than or equal to the number of the actual repetition time slots;.

Optionally, the processor 1110 is configured to read the program instructions in the memory to perform:
indicating explicitly or implicitly the number of times of repetition transmission of the PDSCH to the terminal through the physical layer dynamic signaling.

Optionally, the processor 1110 is configured to read the program instructions in the memory to perform:
indicating the number of times of repetition transmission of the PDSCH to the terminal, through a first field included in downlink control information (DCI).

Optionally, the processor 1110 is configured to read the program instructions in the memory to perform:
indicating the number of times of repetition transmission of the PDSCH to the terminal, through a Time Domain Resource Allocation (TDRA) table, where the TDRA table is pre-appointed, or pre-allocated through a special RRC signaling, and corresponds to a TDRA field carried in DCI.

Optionally, the processor 1110 is configured to read the program instructions in the memory to perform:
indicating to a terminal whether to skip a PDCCH MO in a first time interval.

Optionally, the processor 1110 is configured to read the program instructions in the memory to perform:
indicating to the terminal whether to skip the PDCCH MO in the first time interval, through a high-layer signaling and/or a physical layer dynamic signaling.

Optionally, the processor 1110 is configured to read the program instructions in the memory to perform:
indicating explicitly or implicitly to the terminal whether to skip the PDCCH MO in the first time interval through the physical layer dynamic signaling.

Optionally, the processor 1110 is configured to read the program instructions in the memory to perform:
indicating to the terminal whether to skip the PDCCH MO in the first time interval, through a second field included in DCI.

Optionally, the processor is configured to read the program instructions in the memory to perform:
indicating to the terminal whether to skip the PDCCH MO in the first time interval through a TDRA table, where the TDRA table is pre-appointed, or pre-allocated through a special RRC signaling, and corresponds to a TDRA field carried in DCI.

Optionally, the transceiver is configured to perform:
transmitting the PDSCH on a resource occupied by the skipped PDCCH MO, when the terminal is indicated to skip the PDCCH MO in the first time interval.

Optionally, the skipped PDCCH MO is an MO corresponding to a search space corresponding to a PDCCH scheduling a current PDSCH.

Optionally, the first time interval is a PDSCH transmission time.

Optionally, the transmission parameter further includes a start symbol of a start time slot of the PDSCH transmission time and a number of symbols occupied by each PDSCH transmission.

Optionally, the number of times of repetition transmission is a number of times of PDSCH repetition transmission or a number of PDSCH repetition slots.

According to the downlink channel transmission device in the embodiment of the present disclosure, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

It should be noted that the apparatus provided in the embodiment of the present disclosure can implement all the method steps implemented by the method embodiment, and can achieve the same technical effects, and detailed descriptions of the same parts and beneficial effects as the method embodiment in this embodiment are not repeated herein.

As shown in Fig. 12, the present disclosure further provides a downlink channel transmission device, including:
a parameter determining module 1201, configured to determine a transmission parameter of a physical downlink shared channel (PDSCH), where the transmission parameter includes: a number of times N of repetition transmission and a repetition transmission mode, where N is greater than or equal to 1 and is a positive integer;
a first transmission module 1202, configured to first downlink data carried on the PDSCH, according to the transmission parameter.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the resource mapping mode is method II, and the device further includes:
a first processing module, configured to, when the PDSCH transmission and a PDCCH transmission collide on the symbols occupied by the PDCCH MO, perform a punching operation on the collided PDSCH.

Optionally, the resource mapping mode is method II, and the device further includes:
a second processing module, configured to, when the PDSCH transmission and a PDCCH transmission collide on the symbols occupied by the PDCCH MO, perform a frequency division multiplexing on the PDSCH and the PDCCH which are collided, or transmitting second downlink data carried on a PDCCH on available symbols other than the symbols occupied by the collided PDCCH MO.

Optionally, the transmission parameter is pre-agreed, or configured by a base station.

Optionally, the transmission parameter is configured by the base station;
the device further includes:
a first indicating module, configured to indicate the transmission parameter of the PDSCH to a terminal, through a high-layer signaling and/or a physical layer dynamic signaling.

Optionally, the first indicating module includes:
a first configuring unit, configured to, when a PDSCH repetition transmission type indication is a first value, configure the number of times of repetition transmission of the PDSCH in a semi-static mode through a Radio Resource Control (RRC) dedicated signaling;
a second configuring unit, configured to, when the PDSCH repetition transmission type indication is a second value, configure the number of times of repetition transmission of the PDSCH through a physical layer dynamic signaling; where the PDSCH repetition transmission type indication is configured by the base station through an RRC signaling.

Optionally, the first indicating module further includes:
a first indicating unit, configured to, indicate explicitly or implicitly the number of times of repetition transmission of the PDSCH to the terminal through the physical layer dynamic signaling.

Optionally, the first indicating unit is further configured to:
indicate the number of times of repetition transmission of the PDSCH to the terminal, through a first field included in downlink control information (DCI).

Optionally, the first indicating unit is further configured to:
indicating the number of times of repetition transmission of the PDSCH to the terminal, through a Time Domain Resource Allocation (TDRA) table, where the TDRA table is pre-appointed, or pre-allocated through a special RRC signaling, and corresponds to a TDRA field carried in DCI.

Optionally, the device further includes:
a second indicating module, configured to indicate to a terminal whether to skip a PDCCH MO in a first time interval.

Optionally, the second indicating module includes:
a first indicating sub-module, configured to indicate to the terminal whether to skip the PDCCH MO in the first time interval, through a high-layer signaling and/or a physical layer dynamic signaling.

Optionally, the first indicating sub-module includes:
a second indicating sub-module, configured to indicate explicitly or implicitly to the terminal whether to skip the PDCCH MO in the first time interval through the physical layer dynamic signaling.

Optionally, the second indicating sub-module is configured to:
indicate to the terminal whether to skip the PDCCH MO in the first time interval, through a second field included in DCI.

Optionally, the second indicating sub-module is configured to:
indicate to the terminal whether to skip the PDCCH MO in the first time interval through a TDRA table, where the TDRA table is pre-appointed, or pre-allocated through a special RRC signaling, and corresponds to a TDRA field carried in DCI.

Optionally, the device further includes a second transmitting module configured to:
transmit the PDSCH on a resource occupied by the skipped PDCCH MO, when the terminal is indicated to skip the PDCCH MO in the first time interval.

Optionally, the skipped PDCCH MO is an MO corresponding to a search space corresponding to a PDCCH scheduling a current PDSCH.

Optionally, the first time interval is a PDSCH transmission time.

Optionally, the transmission parameter further includes a start symbol of a start time slot of the PDSCH transmission and a number of symbols occupied by each PDSCH transmission.

Optionally, the number of times of repetition transmission is a number of times of PDSCH repetition transmission or a number of PDSCH repetition slots.

According to the downlink channel transmission device in the embodiment of the present disclosure, the transmission parameter of the PDSCH is determined, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

It should be noted that, in the embodiment of the present application, the division of the unit is schematic, and is only one logic function division, when the actual implementation is realized, another division mode may be provided. In addition, functional units in the embodiments of the present application may be integrated into one processing unit, or each unit may exist alone physically, or two or more units are integrated into one unit. The integrated unit may be implemented in the form of hardware, or may also be implemented in the form of a software functional unit.

The integrated unit, if implemented as a software functional unit and sold or used as a stand-alone product, may be stored in a processor readable storage medium. Based on such understanding, the technical solutions of the present application, which are essential or contributing to the prior art, or all or part of the technical solutions may be embodied in the form of a software product, which is stored in a storage medium and includes several instructions for causing a computer device (which may be a personal computer, a server, a network device, or the like) or a processor (processor) to execute all or part of the steps of the methods described in the embodiments of the present application. And the aforementioned storage medium includes: a U-disk, a removable hard disk, a Read-Only Memory (ROM), a Random Access Memory (RAM), a magnetic disk, an optical disk, or other various media capable of storing program codes.

It should be noted that the apparatus provided in the embodiment of the present disclosure can implement all the method steps implemented by the method embodiment, and can achieve the same technical effects, and detailed descriptions of the same parts and beneficial effects as the method embodiment in this embodiment are not repeated herein.

In some embodiments of the present disclosure, there is also provided a processor-readable storage medium storing program program for causing the processor to perform steps of:
determining a transmission parameter of a physical downlink shared channel (PDSCH), where the transmission parameter includes: a number of times N of repetition transmission and a repetition transmission mode, where N is greater than or equal to 1 and is a positive integer; and
transmitting first downlink data carried on the PDSCH, according to the transmission parameter.

When executed by the processor, the program instructions may implement all the implementation modes applied in the embodiment of the method at the base station side shown in Fig. 2, and are not described herein again to avoid repetition.

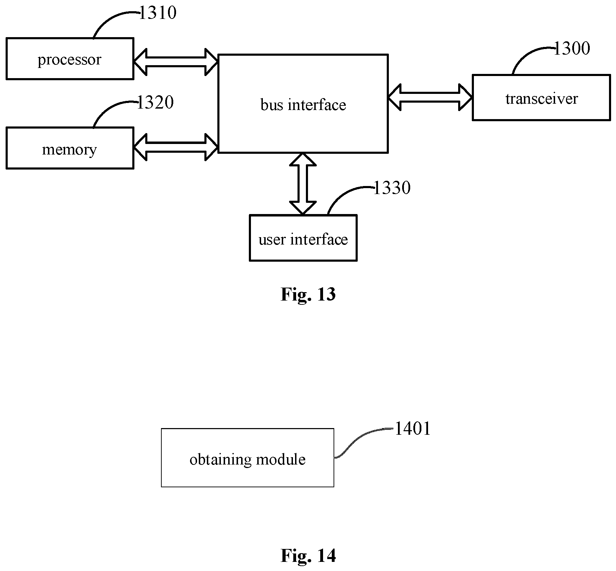

As shown in Fig. 13, an embodiment of the present disclosure further provides a downlink channel transmission device, including: memory 1320, transceiver 1300, processor 1310: a memory 1320 for storing program instructions; a transceiver 1300 for sending and receiving data under the control of the processor 1310; the processor 1310 is configured to read the program instructions in the memory 1320 and perform the following operations:
obtaining a transmission parameter of a physical downlink shared channel (PDSCH), where the transmission parameter includes: a number of times N of repetition transmission and a repetition transmission mode, where N is greater than or equal to 1 and is a positive integer.

In Fig. 13, among other things, the bus architecture may include any number of interconnected buses and bridges, with one or more processors, represented by processor 1310, and various circuits, represented by memory 1320, being linked together. The bus architecture may also link together various other circuits such as peripherals, voltage regulators, power management circuits, and the like, which are well known in the art, and therefore, will not be described any further herein. The bus interface provides an interface. The transceiver 1300 may be a plurality of elements including a transmitter and a receiver that provide a means for communicating with various other apparatus over a transmission medium including wireless channels, wired channels, fiber optic cables, and the like. User interface 1330 may also be an interface capable of interfacing with a desired device for different user devices, including but not limited to a keypad, display, speaker, microphone, joystick, etc.

The processor 1310 is responsible for managing the bus architecture and general processing, and the memory 1320 may store data used by the processor 1310 in performing operations.

Alternatively, the processor 1310 may be a CPU (central processing unit), an ASIC (Application Specific Integrated Circuit), an FPGA (Field-Programmable Gate Array), or a CPLD (Complex Programmable Logic Device), and the processor 1310 may also have a multi-core architecture.

The processor 1310 is configured to execute any of the methods provided by the embodiments of the present application by calling the program instructions stored in the memory according to the obtained executable instructions. The processor 1310 and the memory 1320 may also be physically disposed separately.

Optionally, the transmission parameter is pre-agreed or indicated by the base station.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the transmission parameter is indicated by the base station;
the transceiver 1300 is configured to perform:
receiving a first signaling sent by the base station;
the processor is configured to read the program instructions in the memory to perform obtaining the transmission parameter of the PDSCH based on the first signaling, where the first signaling includes a high-layer signaling and/or a physical layer dynamic signaling.

Optionally, the first signaling is the physical layer dynamic signaling;
the processor 1310 is configured to read the program instructions in the memory to perform:
obtaining the number of times of repetition transmission of the PDSCH, according to an explicit indication or an implicit indication of a physical layer dynamic signaling.

Optionally, the explicit indication of the physical layer dynamic signaling is a first field included in downlink control information (DCI), and the first field is configured to indicate the number of times of repetition transmission of the PDSCH;
the implicit indication of the physical layer dynamic signaling is a Time Domain Resource Allocation (TDRA) table corresponding to a TDRA field carried in the DCI, and a first preset row of the TDRA table is configured to indicate the number of times of repetition transmission of the PDSCH.

Optionally, the processor 1310 is configured to read the program instructions in the memory to perform:
decoding first downlink data carried on the corresponding PDSCH, according to the transmission parameter.

Optionally, the resource mapping mode is method II, and the processor 1310 is configured to read the program instructions in the memory to perform:
when the PDSCH transmission and a PDCCH transmission collide on the symbols occupied by the PDCCH MO and a frequency division multiplexing is performed on the PDSCH and the PDCCH which are collided, monitoring the PDCCH on the corresponding PDCCH MO, or
when the PDSCH transmission and a PDCCH transmission collide on the symbols occupied by the PDCCH MO, monitoring the PDCCH on other PDCCH MOs than the symbols occupied by the collided PDCCH MO.

Optionally, the processor 1310 is configured to read the program instructions in the memory to perform:
determining whether to skip a PDCCH MO in a first time interval based on an indication from a base station;
when the base station indicates not to skip the PDCCH MO in the first time interval, monitoring the PDCCH MO in the first time interval;
when the base station indicates to skip the PDCCH MO in the first time interval, monitoring the PDCCH MO in other time intervals than the first time interval.

Optionally, when the base station indicates to skip the PDCCH MO in the first time interval, the skipped PDCCH MO is an MO corresponding to a search space corresponding to a PDCCH scheduling a current PDSCH.

Optionally, the transceiver 1300 is configured to perform:
receiving a second signaling sent by the base station;
the processor is configured to read the program instructions in the memory to perform:
   determining whether to skip the PDCCH MO in the first time interval according to the second signaling, where the second signaling includes a high-layer signaling and/or a physical layer dynamic signaling.

Optionally, the second signaling is the physical layer dynamic signaling;
the processor 1310 is configured to read the program instructions in the memory to perform:
determining whether the PDSCH skips the PDCCH MO in the first time interval, according to an explicit indication or an implicit indication of the physical layer dynamic signaling.

Optionally, the explicit indication of the physical layer dynamic signaling is a second field included in DCI, and the second field is configured to indicate whether to skip the PDCCH MO in the first time interval;
the implicit indication of the physical layer dynamic signaling is a Time Domain Resource Allocation (TDRA) table corresponding to a TDRA field carried in the DCI, and a second preset row or a first preset column of the TDRA table is configured to indicate whether to skip the PDCCH MO in the first time interval.

Optionally, the first time interval is a PDSCH transmission time.

Optionally, the transmission parameter further includes a start symbol of a start time slot of the PDSCH transmission time and a number of symbols occupied by each PDSCH transmission.

Optionally, the number of times of repetition transmission is a number of times of PDSCH repetition transmission or a number of PDSCH repetition slots.

According to the downlink channel transmission device in the embodiment of the present disclosure, the transmission parameter of the PDSCH is obtained, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

It should be noted that the apparatus provided in the embodiment of the present disclosure can implement all the method steps implemented by the method embodiment, and can achieve the same technical effects, and detailed descriptions of the same parts and beneficial effects as the method embodiment in this embodiment are not repeated herein.

As shown in Fig. 14, an embodiment of the present disclosure further provides a downlink channel transmission device, including:

an obtaining module 1401, configured to obtain a transmission parameter of a physical downlink shared channel (PDSCH), where the transmission parameter includes: a number of times N of repetition transmission and a repetition transmission mode, where N is greater than or equal to 1 and is a positive integer.

Optionally, the transmission parameter is pre-agreed, or indicated by a base station.

Optionally, the repetition transmission mode is a resource mapping mode between a PDSCH repetition transmission and a physical downlink control channel monitoring occasion (PDCCH MO).

Optionally, the resource mapping mode includes one of:
method I: symbols occupied by a PDSCH transmission or a repetition PDSCH transmission do not include symbols occupied by the PDCCH MO;
method II: symbols occupied by a PDSCH transmission or a repetition PDSCH transmission include a part or all of symbols occupied by the PDCCH MO.

Optionally, the transmission parameter is indicated by the base station;
the obtaining module includes:
a first receiving unit, configured to receive a first signaling sent by the base station;
a first obtaining unit, configured to obtain the transmission parameter of the PDSCH based on the first signaling, where the first signaling includes a high-layer signaling and/or a physical layer dynamic signaling.

Optionally, the first signaling is the physical layer dynamic signaling;
the first obtaining unit is configured to:
obtain the number of times of repetition transmission of the PDSCH, according to an explicit indication or an implicit indication of a physical layer dynamic signaling.

Optionally, the explicit indication of the physical layer dynamic signaling is a first field included in downlink control information (DCI), and the first field is configured to indicate the number of times of repetition transmission of the PDSCH;
the implicit indication of the physical layer dynamic signaling is a Time Domain Resource Allocation (TDRA) table corresponding to a TDRA field carried in the DCI, and a first preset row of the TDRA table is configured to indicate the number of times of repetition transmission of the PDSCH.

Optionally, the device further includes:
a decoding module, configured to decode first downlink data carried on the corresponding PDSCH, according to the transmission parameter.

Optionally, the resource mapping mode is method II, and the device further includes:
a first monitoring module, configured to, when the PDSCH transmission and a PDCCH transmission collide on the symbols occupied by the PDCCH MO and a frequency division multiplexing is performed on the PDSCH and the PDCCH which are collided, monitor the PDCCH on the corresponding PDCCH MO,
when the PDSCH transmission and a PDCCH transmission collide on the symbols occupied by the PDCCH MO, monitoring the PDCCH on other PDCCH MOs than the symbols occupied by the collided PDCCH MO.

Optionally, the device further includes:
a determining module, configured to, determine whether to skip a PDCCH MO in a first time interval based on an indication from a base station;
a second monitoring module, configured to, when the base station indicates not to skip the PDCCH MO in the first time interval, monitor the PDCCH MO in the first time interval;
a third monitoring module, configured to, when the base station indicates to skip the PDCCH MO in the first time interval, monitor the PDCCH MO in other time intervals than the first time interval.

Optionally, when the base station indicates to skip the PDCCH MO in the first time interval, the skipped PDCCH MO is an MO corresponding to a search space corresponding to a PDCCH scheduling a current PDSCH.

Optionally, the determining module includes:
a second receiving unit, configured to receive a second signaling sent by the base station;
a first determining unit, configured to determine whether to skip the PDCCH MO in the first time interval according to the second signaling, where the second signaling includes a high-layer signaling and/or a physical layer dynamic signaling.

Optionally, the second signaling is the physical layer dynamic signaling;
the first determining unit is further configured to:
determine whether the PDSCH skips the PDCCH MO in the first time interval, according to an explicit indication or an implicit indication of the physical layer dynamic signaling.

Optionally, the explicit indication of the physical layer dynamic signaling is a second field included in DCI, and the second field is configured to indicate whether to skip the PDCCH MO in the first time interval;
the implicit indication of the physical layer dynamic signaling is a Time Domain Resource Allocation (TDRA) table corresponding to a TDRA field carried in the DCI, and a second preset row or a first preset column of the TDRA table is configured to indicate whether to skip the PDCCH MO in the first time interval.

Optionally, the first time interval is a PDSCH transmission time.

Optionally, the transmission parameter further includes a start symbol of a start time slot of the PDSCH transmission time and a number of symbols occupied by each PDSCH transmission.

Optionally, the number of times of repetition transmission is a number of times of PDSCH repetition transmission or a number of PDSCH repetition slots.

According to the downlink channel transmission device in the embodiment of the present disclosure, the transmission parameter of the PDSCH is obtained, where the transmission parameter includes: a number of times N of repetition transmission and a repetition transmission mode, where N is greater than or equal to 1 and is a positive integer, and the PDSCH is transmitted according to the transmission parameter, thereby reducing the system overhead and the transmission latency of XR service.

It should be noted that, in the embodiment of the present application, the division of the unit is schematic, and is only one logic function division, when the actual implementation is realized, another division mode may be provided. In addition, functional units in the embodiments of the present application may be integrated into one processing unit, or each unit may exist alone physically, or two or more units are integrated into one unit. The integrated unit may be implemented in the form of hardware, or may also be implemented in the form of a software functional unit.

The integrated unit, if implemented as a software functional unit and sold or used as a stand-alone product, may be stored in a processor readable storage medium. Based on such understanding, the technical solutions of the present application, which are essential or contributing to the prior art, or all or part of the technical solutions may be embodied in the form of a software product, which is stored in a storage medium and includes several instructions for causing a computer device (which may be a personal computer, a server, a network device, or the like) or a processor (processor) to execute all or part of the steps of the methods described in the embodiments of the present application. And the aforementioned storage medium includes: a U-disk, a removable hard disk, a Read-Only Memory (ROM), a Random Access Memory (RAM), a magnetic disk, an optical disk, or other various media capable of storing program codes.

It should be noted that the apparatus provided in the embodiment of the present disclosure can implement all the method steps implemented by the method embodiment, and can achieve the same technical effects, and detailed descriptions of the same parts and beneficial effects as the method embodiment in this embodiment are not repeated herein.

In some embodiments of the present disclosure, a processor-readable storage medium, storing program instructions, where the program instructions are executed by the processor to perform:
obtaining a transmission parameter of a physical downlink shared channel (PDSCH), where the transmission parameter includes: a number of times N of repetition transmission and a repetition transmission mode, where N is greater than or equal to 1 and is a positive integer.

When executed by the processor, the program instructions may implement all the implementation modes in the embodiment of the method applied to the terminal side shown in Fig. 10, and are not described herein again to avoid repetition.

The technical scheme provided by the embodiment of the application can be suitable for various systems, especially 5G systems. For example, the applicable System may be a Global System for Mobile communication (GSM) System, a Code Division Multiple Access (CDMA) System, a Wideband Code Division Multiple Access (WCDMA) General Packet Radio Service (General Packet Radio Service, GPRS) System, a Long Term Evolution (Long Term Evolution, LTE) System, a LTE Frequency Division Duplex (FDD) System, a LTE Time Division Duplex (TDD) System, a Long Term Evolution (Long Term Evolution, LTE-a) System, a Universal Mobile telecommunications System (Universal Mobile telecommunications System, UMTS), a Universal internet Access (WiMAX) System, a New wireless Access (WiMAX) System, a New Radio network (NR 5, New NR) System, etc. These various systems include terminal devices and network devices. The System may further include a core network portion, such as an Evolved Packet System (EPS), a 5G System (5 GS), and the like.

The terminal device referred to in the embodiments of the present application may be a device providing voice and/or data connectivity to a user, a handheld device having a wireless connection function, or other processing device connected to a wireless modem. In different systems, the names of the terminal devices may be different, for example, in a 5G system, the terminal device may be referred to as a User Equipment (UE). A wireless terminal device, which may be a mobile terminal device such as a mobile telephone (or "cellular" telephone) and a computer having a mobile terminal device, e.g., a portable, pocket, hand-held, computer-included or vehicle-mounted mobile device, may communicate with one or more Core Networks (CNs) via a Radio Access Network (RAN), and may exchange language and/or data with the Radio Access Network. Examples of such devices include Personal Communication Service (PCS) phones, cordless phones, Session Initiation Protocol (SIP) phones, Wireless Local Loop (WLL) stations, Personal Digital Assistants (PDAs), and the like. The wireless terminal device may also be referred to as a system, a subscriber unit (subscriber unit), a subscriber station (subscriber station), a mobile station (mobile station), a remote station (remote station), an access point (access point), a remote terminal (remote terminal), an access terminal (access terminal), a user terminal (user terminal), a user agent (user agent), and a user device (user device), which is not limited in this embodiment.

The network device according to the embodiment of the present application may be a base station, and the base station may include a plurality of cells for serving a terminal. A base station may also be called an access point, or may be a device in an access network that communicates over the air-interface, through one or more sectors, with wireless terminal devices, or by other names, depending on the particular application. The network device may be configured to exchange received air frames and Internet Protocol (IP) packets with one another as a router between the wireless terminal device and the rest of the access network, which may include an Internet Protocol (IP) communications network. The network device may also coordinate attribute management for the air interface. For example, the network device according to the embodiment of the present application may be a Base Transceiver Station (BTS) in a Global System for Mobile communications (GSM) or Code Division Multiple Access (CDMA), may be a network device (NodeB) in a Wideband Code Division Multiple Access (WCDMA), may be an evolved Node B (eNB or e-NodeB) in a Long Term Evolution (LTE) System, may be a 5G Base Station (gNB) in a 5G network architecture (next generation System), may be a Home evolved Node B (Home Node B, HeNB), a relay Node (relay Node), a Home Base Station (femto), a pico Base Station (pico) and the like, and is not limited in the embodiments of the present application. In some network configurations, a network device may include Centralized Unit (CU) nodes and Distributed Unit (DU) nodes, which may also be geographically separated.

Multiple Input Multiple Output (MIMO) transmission may be performed between the network device and the terminal device by using one or more antennas, where the MIMO transmission may be Single User MIMO (SU-MIMO) or Multi-User MIMO (MU-MIMO). According to the form and the number of the root antenna combination, the MIMO transmission can be 2D-MIMO, 3D-MIMO, FD-MIMO or massive-MIMO, and can also be diversity transmission, precoding transmission, beamforming transmission, etc.

As will be appreciated by one skilled in the art, embodiments of the present application may be provided as a method, system, or computer program product. Accordingly, the present application may take the form of an entirely hardware embodiment, an entirely software embodiment or an embodiment combining software and hardware aspects. Furthermore, the present application may take the form of a computer program product embodied on one or more computer-usable storage media (including, but not limited to, disk storage, optical storage, and the like) having computer-usable program code embodied therein.

It is to be understood that the embodiments described in this disclosure may be implemented in hardware, software, firmware, middleware, microcode, or any combination thereof. For a hardware implementation, the modules, units, sub-modules, sub-units, etc. may be implemented in one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), general purpose processors, controllers, micro-controllers, microprocessors, other electronic units designed to perform the functions described herein, or a combination thereof.

The present disclosure is described with reference to flowchart illustrations and/or block diagrams of methods, apparatus (systems), and computer program products according to embodiments of the application. It will be understood that each flow and/or block of the flowchart illustrations and/or block diagrams, and combinations of flows and/or blocks in the flowchart illustrations and/or block diagrams, can be implemented by computer-executable instructions. These computer-executable instructions may be provided to a processor of a general purpose computer, special purpose computer, embedded processor, or other programmable data processing apparatus to produce a machine, such that the instructions, which execute via the processor of the computer or other programmable data processing apparatus, create means for implementing the functions specified in the flowchart flow or flows and/or block diagram block or blocks.

These processor-executable instructions may also be stored in a processor-readable memory that can direct a computer or other programmable data processing apparatus to function in a particular mode, such that the instructions stored in the processor-readable memory produce an article of manufacture including instruction means which implement the function specified in the flowchart flow or flows and/or block diagram block or blocks.

These processor-executable instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the flowchart flow or flows and/or block diagram block or blocks.

It will be apparent to those skilled in the art that various changes and modifications may be made in the present application without departing from the spirit and scope of the application. Thus, if such modifications and variations of the present application fall within the scope of the claims of the present application and their equivalents, the present application is intended to include such modifications and variations as well.

## Claims

1. A downlink channel transmission method, applied to a base station and comprising:
determining a transmission parameter of a physical downlink shared channel (PDSCH), wherein the transmission parameter comprises: a number of times N of repetition transmission and a repetition transmission mode, wherein N is greater than or equal to 1 and is a positive integer; and
transmitting first downlink data carried on the PDSCH, according to the transmission parameter.

2. The method according to claim 1, wherein the repetition transmission mode is a resource mapping mode between a PDSCH repetition transmission and a physical downlink control channel monitoring occasion (PDCCH MO).

3. The method according to claim 2, wherein the resource mapping mode comprises one of:
method I: symbols occupied by a PDSCH transmission or a repetition PDSCH transmission do not comprise symbols occupied by the PDCCH MO;
method II: symbols occupied by a PDSCH transmission or a repetition PDSCH transmission comprise a part or all of symbols occupied by the PDCCH MO.

4. The method according to claim 3, wherein the resource mapping mode is method II, and the method further comprises:
when the PDSCH transmission and a PDCCH transmission collide on the symbols occupied by the PDCCH MO, performing a punching operation on the collided PDSCH.

5. The method according to claim 3, wherein the resource mapping mode is method II, and the method further comprises:
when the PDSCH transmission and a PDCCH transmission collide on the symbols occupied by the PDCCH MO, performing a frequency division multiplexing on the PDSCH and the PDCCH which are collided, or transmitting second downlink data carried on a PDCCH on available symbols other than the symbols occupied by the collided PDCCH MO.

6. The method according to claim 1, wherein the transmission parameter is pre-agreed, or configured by a base station.

7. The method according to claim 6, wherein the transmission parameter is configured by the base station;
subsequent to the determining the transmission parameter of the PDSCH, the method further comprises: indicating the transmission parameter of the PDSCH to a terminal, through a high-layer signaling and/or a physical layer dynamic signaling.

8. The method according to claim 7, wherein the indicating the transmission parameter of the PDSCH to the terminal through the high-layer signaling and/or the physical layer dynamic signaling comprises:
when a PDSCH repetition transmission type indication is a first value, configuring the number of times of repetition transmission of the PDSCH in a semi-static mode through a Radio Resource Control (RRC) dedicated signaling;
when the PDSCH repetition transmission type indication is a second value, configuring the number of times of repetition transmission of the PDSCH through a physical layer dynamic signaling; wherein the PDSCH repetition transmission type indication is configured by the base station through an RRC signaling.

9. The method according to claim 8, further comprising:
when the PDSCH repetition transmission type indication is the second value, configuring a mapping type indication of the PDSCH in a nominal repetition time slot through an RRC dedicated signaling; wherein
when the mapping type indication is a third value, a number of nominal PDSCH repetition time slots is equal to a number of actual repetition time slots;
when the mapping type indication is a fourth value, the number of the nominal PDSCH repetition time slots is less than or equal to the number of the actual repetition time slots.

10. The method according to claim 7, wherein the indicating the transmission parameter of the PDSCH to the terminal through the physical layer dynamic signaling comprises:
indicating explicitly or implicitly the number of times of repetition transmission of the PDSCH to the terminal through the physical layer dynamic signaling.

11. The method according to claim 10, wherein the indicating explicitly the number of times of repetition transmission of the PDSCH to the terminal through the physical layer dynamic signaling comprises:
indicating the number of times of repetition transmission of the PDSCH to the terminal, through a first field included in downlink control information (DCI).

12. The method according to claim 10, wherein the indicating implicitly the number of times of repetition transmission of the PDSCH to the terminal through the physical layer dynamic signaling comprises:
indicating the number of times of repetition transmission of the PDSCH to the terminal, through a Time Domain Resource Allocation (TDRA) table, wherein the TDRA table is pre-appointed, or pre-allocated through a special RRC signaling, and corresponds to a TDRA field carried in DCI.

13. The method according to claim 1, further comprising:
indicating to a terminal whether to skip a PDCCH MO in a first time interval.

14. The method according to claim 13, wherein the indicating to the terminal whether to skip the PDCCH MO in the first time interval comprises:
indicating to the terminal whether to skip the PDCCH MO in the first time interval, through a high-layer signaling and/or a physical layer dynamic signaling.

15. The method according to claim 14, wherein the indicating to the terminal whether to skip the PDCCH MO in the first time interval through the physical layer dynamic signaling comprises:
indicating explicitly or implicitly to the terminal whether to skip the PDCCH MO in the first time interval through the physical layer dynamic signaling.

16. The method according to claim 15, wherein the indicating explicitly to the terminal whether to skip the PDCCH MO in the first time interval through the physical layer dynamic signaling comprises:
indicating to the terminal whether to skip the PDCCH MO in the first time interval, through a second field included in DCI.

17. The method according to claim 15, wherein the indicating implicitly to the terminal whether to skip the PDCCH MO in the first time interval through the physical layer dynamic signaling comprises:
indicating to the terminal whether to skip the PDCCH MO in the first time interval through a TDRA table, wherein the TDRA table is pre-appointed, or pre-allocated through a special RRC signaling, and corresponds to a TDRA field carried in DCI.

18. The method according to claim 13, wherein subsequent to the indicating to the terminal whether to skip the PDCCH MO in the first time interval, the method further comprises:
transmitting the PDSCH on a resource occupied by the skipped PDCCH MO, when the terminal is indicated to skip the PDCCH MO in the first time interval.

19. The method according to claim 18, wherein the skipped PDCCH MO is an MO corresponding to a search space corresponding to a PDCCH scheduling a current PDSCH.

20. The method according to any one of claims 13 to 18, wherein the first time interval is a PDSCH transmission time.

21. The method according to claim 1, wherein the number of times of repetition transmission is a number of times of PDSCH repetition transmission or a number of PDSCH repetition slots.

22. A downlink channel transmission method, applied to a terminal and comprising:
obtaining a transmission parameter of a physical downlink shared channel (PDSCH), wherein the transmission parameter comprises: a number of times N of repetition transmission and a repetition transmission mode, wherein N is greater than or equal to 1 and is a positive integer.

23. The method according to claim 22, wherein the transmission parameter is pre-agreed, or indicated by a base station.

24. The method according to claim 22, wherein the repetition transmission mode is a resource mapping mode between a PDSCH repetition transmission and a physical downlink control channel monitoring occasion (PDCCH MO).

25. The method according to claim 24, wherein the resource mapping mode comprises one of:
method I: symbols occupied by a PDSCH transmission or a repetition PDSCH transmission do not comprise symbols occupied by the PDCCH MO;
method II: symbols occupied by a PDSCH transmission or a repetition PDSCH transmission comprise a part or all of symbols occupied by the PDCCH MO.

26. The method according to claim 23, wherein the transmission parameter is indicated by the base station;
the obtaining the transmission parameter of the PDSCH comprises:
receiving a first signaling sent by the base station;
obtaining the transmission parameter of the PDSCH based on the first signaling, wherein the first signaling comprises a high-layer signaling and/or a physical layer dynamic signaling.

27. The method according to claim 26, wherein the first signaling is the physical layer dynamic signaling;
the obtaining the transmission parameter of the PDSCH based on the first signaling comprises:
obtaining the number of times of repetition transmission of the PDSCH, according to an explicit indication or an implicit indication of a physical layer dynamic signaling.

28. The method according to claim 27, wherein
the explicit indication of the physical layer dynamic signaling is a first field included in downlink control information (DCI), and the first field is configured to indicate the number of times of repetition transmission of the PDSCH;
the implicit indication of the physical layer dynamic signaling is a Time Domain Resource Allocation (TDRA) table corresponding to a TDRA field carried in the DCI, and a first preset row of the TDRA table is configured to indicate the number of times of repetition transmission of the PDSCH.

29. The method according to claim 22, further comprising:
decoding first downlink data carried on the corresponding PDSCH, according to the transmission parameter.

30. The method according to claim 25, wherein the resource mapping mode is method II, and the method further comprises:
when the PDSCH transmission and a PDCCH transmission collide on the symbols occupied by the PDCCH MO and a frequency division multiplexing is performed on the PDSCH and the PDCCH which are collided, monitoring the PDCCH on the corresponding PDCCH MO, or
when the PDSCH transmission and a PDCCH transmission collide on the symbols occupied by the PDCCH MO, monitoring the PDCCH on other PDCCH MOs than the symbols occupied by the collided PDCCH MO.

31. The method according to claim 22, further comprising:
determining whether to skip a PDCCH MO in a first time interval based on an indication from a base station;
when the base station indicates not to skip the PDCCH MO in the first time interval, monitoring the PDCCH MO in the first time interval;
when the base station indicates to skip the PDCCH MO in the first time interval, monitoring the PDCCH MO in other time intervals than the first time interval.

32. The method according to claim 31, wherein when the base station indicates to skip the PDCCH MO in the first time interval, the skipped PDCCH MO is an MO corresponding to a search space corresponding to a PDCCH scheduling a current PDSCH.

33. The method according to claim 31, wherein the determining whether to skip the PDCCH MO in the first time interval based on the indication from the base station comprises:
receiving a second signaling sent by the base station;
determining whether to skip the PDCCH MO in the first time interval according to the second signaling, wherein the second signaling comprises a high-layer signaling and/or a physical layer dynamic signaling.

34. The method according to claim 33, wherein the second signaling is the physical layer dynamic signaling;
the determining whether to skip the PDCCH MO in the first time interval according to the second signaling comprises:
determining whether the PDSCH skips the PDCCH MO in the first time interval, according to an explicit indication or an implicit indication of the physical layer dynamic signaling.

35. The method according to claim 34, wherein,
the explicit indication of the physical layer dynamic signaling is a second field included in DCI, and the second field is configured to indicate whether to skip the PDCCH MO in the first time interval;
the implicit indication of the physical layer dynamic signaling is a Time Domain Resource Allocation (TDRA) table corresponding to a TDRA field carried in the DCI, and a second preset row or a first preset column of the TDRA table is configured to indicate whether to skip the PDCCH MO in the first time interval.

36. The method according to any of claims 31 to 35, wherein the first time interval is a PDSCH transmission time.

37. The method according to claim 22, wherein the number of times of repetition transmission is a number of times of PDSCH repetition transmission or a number of PDSCH repetition slots.

38. A downlink channel transmission device, comprising: a memory, a transceiver, a processor, wherein a memory is configured to store program instructions, the transceiver is configured to send and receive data under a control of the processor, the processor is configured to read the program instructions in the memory to perform:
determining a transmission parameter of a physical downlink shared channel (PDSCH), wherein the transmission parameter comprises: a number of times N of repetition transmission and a repetition transmission mode, wherein N is greater than or equal to 1 and is a positive integer; and
transmitting first downlink data carried on the PDSCH, according to the transmission parameter.

39. The downlink channel transmission device according to claim 38, wherein the repetition transmission mode is a resource mapping mode between a PDSCH repetition transmission and a physical downlink control channel monitoring occasion (PDCCH MO).

40. The downlink channel transmission device according to claim 39, wherein the resource mapping mode comprises one of:
method I: symbols occupied by a PDSCH transmission or a repetition PDSCH transmission do not comprise symbols occupied by the PDCCH MO;
method II: symbols occupied by a PDSCH transmission or a repetition PDSCH transmission comprise a part or all of symbols occupied by the PDCCH MO.

41. The downlink channel transmission device according to claim 40, wherein the resource mapping mode is two, and the processor is configured to read the program instructions in the memory to perform:
when the PDSCH transmission and a PDCCH transmission collide on the symbols occupied by the PDCCH MO, performing a punching operation on the collided PDSCH.

42. The downlink channel transmission device according to claim 40, wherein the resource mapping mode is method II, and the processor is configured to read the program instructions in the memory to perform:
when the PDSCH transmission and a PDCCH transmission collide on the symbols occupied by the PDCCH MO, performing a frequency division multiplexing on the PDSCH and the PDCCH which are collided, or
the transceiver is configured to perform:
transmitting second downlink data carried on a PDCCH on available symbols other than the symbols occupied by the collided PDCCH MO.

43. The downlink channel transmission device according to claim 38, wherein the transmission parameter is pre-agreed, or configured by a base station.

44. The downlink channel transmission device according to claim 43, wherein the transmission parameter is configured by the base station;
the processor is configured to read the program instructions in the memory to perform:
indicating the transmission parameter of the PDSCH to a terminal, through a high-layer signaling and/or a physical layer dynamic signaling.

45. The downlink channel transmission device according to claim 38, wherein the processor is configured to read the program instructions in the memory to perform:
indicating to a terminal whether to skip a PDCCH MO in a first time interval.

46. A downlink channel transmission device, comprising:
a parameter determining module, configured to determine a transmission parameter of a physical downlink shared channel (PDSCH), wherein the transmission parameter comprises: a number of times N of repetition transmission and a repetition transmission mode, wherein N is greater than or equal to 1 and is a positive integer;
a first transmission module, configured to first downlink data carried on the PDSCH, according to the transmission parameter.

47. The downlink channel transmission device according to claim 46, wherein the repetition transmission mode is a resource mapping mode between a PDSCH repetition transmission and a physical downlink control channel monitoring occasion (PDCCH MO).

48. The downlink channel transmission device according to claim 47, wherein the resource mapping mode comprises one of:
method I: symbols occupied by a PDSCH transmission or a repetition PDSCH transmission do not comprise symbols occupied by the PDCCH MO;
method II: symbols occupied by a PDSCH transmission or a repetition PDSCH transmission comprise a part or all of symbols occupied by the PDCCH MO.

49. A downlink channel transmission device, comprising: a memory, a transceiver, a processor, wherein the memory is configured to store program instructions, the transceiver is configured to send and receive data under a control of the processor, and the processor is configured to read the program instructions in the memory to perform:
obtaining a transmission parameter of a physical downlink shared channel (PDSCH), wherein the transmission parameter comprises: a number of times N of repetition transmission and a repetition transmission mode, wherein N is greater than or equal to 1 and is a positive integer.

50. The downlink channel transmission device according to claim 49, wherein the repetition transmission mode is a resource mapping mode between a PDSCH repetition transmission and a physical downlink control channel monitoring occasion (PDCCH MO).

51. The downlink channel transmission device according to claim 50, wherein the resource mapping mode comprises one of:
method I: symbols occupied by a PDSCH transmission or a repetition PDSCH transmission do not comprise symbols occupied by the PDCCH MO;
method II: symbols occupied by a PDSCH transmission or a repetition PDSCH transmission comprise a part or all of symbols occupied by the PDCCH MO.

52. The downlink channel transmission device according to claim 49, wherein the processor is configured to read the program instructions in the memory to perform:
decoding first downlink data carried on the corresponding PDSCH, according to the transmission parameter.

53. The downlink channel transmission device according to claim 51, wherein the resource mapping mode is method II, and the processor is configured to read the program instructions in the memory to perform:
when the PDSCH transmission and a PDCCH transmission collide on the symbols occupied by the PDCCH MO and a frequency division multiplexing is performed on the PDSCH and the PDCCH which are collided, monitoring the PDCCH on the corresponding PDCCH MO, or
when the PDSCH transmission and a PDCCH transmission collide on the symbols occupied by the PDCCH MO, monitoring the PDCCH on other PDCCH MOs than the symbols occupied by the collided PDCCH MO.

54. The downlink channel transmission device according to claim 49, wherein the processor is configured to read the program instructions in the memory to perform:
determining whether to skip a PDCCH MO in a first time interval based on an indication from a base station;
when the base station indicates not to skip the PDCCH MO in the first time interval, monitoring the PDCCH MO in the first time interval;
when the base station indicates to skip the PDCCH MO in the first time interval, monitoring the PDCCH MO in other time intervals than the first time interval.

55. A downlink channel transmission device, comprising:
an obtaining module, configured to obtain a transmission parameter of a physical downlink shared channel (PDSCH), wherein the transmission parameter comprises: a number of times N of repetition transmission and a repetition transmission mode, wherein N is greater than or equal to 1 and is a positive integer.

56. The downlink channel transmission device according to claim 55, wherein the transmission parameter is pre-agreed, or indicated by a base station.

57. The downlink channel transmission device according to claim 55, wherein the repetition transmission mode is a resource mapping mode between a PDSCH repetition transmission and a physical downlink control channel monitoring occasion (PDCCH MO).

58. The downlink channel transmission device according to claim 57, wherein the resource mapping mode comprises one of:
method I: symbols occupied by a PDSCH transmission or a repetition PDSCH transmission do not comprise symbols occupied by the PDCCH MO;
method II: symbols occupied by a PDSCH transmission or a repetition PDSCH transmission comprise a part or all of symbols occupied by the PDCCH MO.

59. A processor-readable storage medium, storing program instructions, wherein the program instructions are executed by the processor to perform the downlink channel transmission method according to any one of claims 1 to 21, or to perform the downlink channel transmission method according to any one of claims 22 to 37.

60. A computer program product, stored in a non-transitory storage medium, wherein the computer program product is executed by at least one processor to perform the downlink channel transmission method according to any one of claims 1 to 21, or to perform the downlink channel transmission method according to any one of claims 22 to 37.

61. A base station, configured to perform the downlink channel transmission method according to any one of claims 1 to 21.

62. A terminal, configured to perform the downlink channel transmission method according to any one of claims 22 to 37.
